# EUROPEAN PATENT APPLICATION

(11) **EP 4 657 120 A1**
(43) Date of publication of application: **03.12.2025**
(21) Application number: 24769865.7
(22) Date of filing: 08.03.2024
(51) Int. Cl.: G01S 19/03

(54) **POSITIONING INFORMATION TRANSMISSION METHOD AND APPARATUS, STORAGE MEDIUM, AND COMPUTER PROGRAM PRODUCT**

(30) Priority: 10.03.2023 CN 202310255511
(71) Applicant: Huawei Technologies Co., Ltd., Shenzhen, Guangdong 518129 (CN)
(72) Inventor: LI, Cheng, Shenzhen, Guangdong 518129 (CN); LUO, Qilin, Shenzhen, Guangdong 518129 (CN); LIU, Yi, Shenzhen, Guangdong 518129 (CN); WANG, Han, Shenzhen, Guangdong 518129 (CN); WANG, Yi, Shenzhen, Guangdong 518129 (CN)
(74) Representative: MERH-IP Matias Erny Reichl Hoffmann Patentanwälte PartG mbB
(86) International application number: PCT/CN2024/080725
(87) International publication number: WO 2024/188172

(57) **Abstract**

A positioning information transmission method, an apparatus, a storage medium, and a computer program product are provided, so that a first apparatus receives information indicating accuracy of path information, and improves a path identification solution based on the information, thereby improving accuracy of the path information, and improving positioning accuracy. In this application, the first apparatus sends at least one piece of first information, where the at least one piece of first information is used for positioning, first information in the at least one piece of first information includes measurement information and path information, and the path information indicates a likelihood that a path corresponding to the measurement information is an LOS path and/or an NLOS path. The first apparatus receives second information, where the second information indicates accuracy of the path information. Because the first apparatus can receive the second information indicating accuracy of the path information, the first apparatus can improve a path identification solution based on the second information, to improve path identification performance, so that the path information can be determined more accurately, and positioning accuracy can be improved.

## Description

### CROSS-REFERENCE TO RELATED APPLICATIONS

This application claims priority to Chinese Patent Application No. 202310255511.7, filed with the China National Intellectual Property Administration on March 10, 2023 and entitled "POSITIONING INFORMATION TRANSMISSION METHOD, APPARATUS, STORAGE MEDIUM, AND COMPUTER PROGRAM PRODUCT", which is incorporated herein by reference in its entirety.

### TECHNICAL FIELD

This application relates to the field of positioning technologies, and in particular, to a positioning information transmission method, an apparatus, a storage medium, and a computer program product.

### BACKGROUND

With rapid development of communication technologies, high-precision positioning is gradually determined as an important research project in a 5th generation (5th generation mobile networks or 5th generation wireless systems, 5G) mobile communication system of the 3rd generation partnership project (3rd generation partnership project, 3GPP). Scenarios of new radio (New Radio, NR) positioning mainly include: enhanced mobile broadband (enhanced mobile broadband, eMBB) outdoor, eMBB indoor, ultra-reliable and low-latency communication (ultra-reliable and low-latency communication, URLLC), and massive machine type communication (massive machine type communication, mMTC)/internet of things (internet of things, IoT). NR positioning also requires characteristics such as high security, scalability, high availability, and precision assurance in high-speed applications.

The 3GPP standard supports a plurality of positioning technologies such as time difference of arrival (time difference of arrival, TDOA), angle of departure (angle of departure, AOD), time difference of arrival (time difference of arrival, TDOA), angle of arrival (angle of arrival, AOA), and round trip time (round trip time, RTT). A measurement end (such as a base station or a terminal) may measure a received reference signal to obtain measurement information, where the measurement information may be used for positioning, and the measurement information may include a value of a measurement parameter, and the like. The measurement parameter may be associated with a positioning technology. For example, the positioning technology is an AOA, and the measurement parameter may include, for example, an angle of arrival (angle of arrival, AOA). For another example, the positioning technology is a TDOA, and the measurement parameter may include a time difference of arrival of a reference signal, and the like.

The positioning technology depends on measurement of a line of sight (line of sight, LOS) (that is, a straight-line distance between apparatuses) between apparatuses (for example, between a base station and a terminal, or between terminals). However, in an actual environment, due to existence of various obstacles such as trees, buildings, and walls, a path of a signal measured by the measurement end may not be an LOS path, but a non-line of sight (non-line of sight, NLOS) path of the signal. The NLOS path corresponds to a reflection path of the signal, and has a significant distance deviation from the LOS path. Based on this, how to improve positioning accuracy becomes a problem that needs to be urgently resolved currently.

### SUMMARY

This application provides a positioning information transmission method, an apparatus, a storage medium, and a computer program product, so that a first apparatus sends path information, where the path information indicates a likelihood that a path corresponding to measurement information is an LOS path and/or an NLOS path. The first apparatus may further obtain information indicating accuracy of the path information, and then improve a path identification solution based on the information, thereby improving accuracy of the path information, and improving positioning accuracy.

According to a first aspect, this application provides a positioning information transmission method, and the method may be applied to a first apparatus. The first apparatus may be, for example, a terminal device or a chip (system) in the terminal device, or a network device or a chip (system) in the network device.

In this application, the first apparatus sends at least one piece of first information, where the at least one piece of first information is used for positioning, first information in the at least one piece of first information includes measurement information and path information, the measurement information indicates a measurement result obtained based on a reference signal, and the path information indicates a likelihood that a path corresponding to the measurement information is an LOS path and/or an NLOS path. The first apparatus receives second information, where the second information indicates accuracy of path information in one or more pieces of first information in the at least one piece of first information.

In this embodiment of this application, that the path information indicates the likelihood that the path corresponding to the measurement information is an LOS path and/or an NLOS path may also be replaced with that the path information indicates a probability or a possibility that the path corresponding to the measurement information is an LOS path and/or an NLOS path.

In this application, the first apparatus may determine, based on an LOS/NLOS path identification technology, the likelihood that the path corresponding to the measurement information is an LOS path and/or an NLOS path, thereby improving positioning accuracy. For example, the location management apparatus may receive information indicating the likelihood that the path corresponding to the measurement information is an LOS/NLOS path, and then assign a weight to the measurement information (or may not use the measurement information obtained based on an NLOS path), thereby improving positioning accuracy. For another example, if the first apparatus determines a high likelihood that the path corresponding to the measurement information is an NLOS path, the first apparatus may no longer send the measurement information to the location management apparatus, thereby reducing resource overheads, and avoiding a problem that positioning accuracy is low because the location management apparatus performs positioning based on the measurement information.

In an actual application, it is difficult to identify an LOS/NLOS path. For example, when there are a large quantity of reflectors in a channel, features of an LOS channel and an NLOS channel are similar, and then the identified path may have a deviation (for example, a likelihood that a path that corresponds to the measurement information and that is identified by the first apparatus is an LOS path is inaccurate), resulting in low positioning accuracy.

To resolve this problem, in this application, after reporting the measurement information and the path information, the first apparatus may receive the second information indicating accuracy of the path information. The second information may assist the first apparatus in improving a path identification solution and improving path identification performance. The first apparatus may more accurately determine the likelihood indicating that the path corresponding to the measurement information is an LOS path and/or an NLOS path, thereby improving positioning performance.

In a possible implementation, the second information further includes indication information, and the indication information indicates that the second information has an association relationship with one or more pieces of first information in the at least one piece of first information. In a possible implementation, the second information indicates accuracy of path information in the one or more pieces of first information. It may also be understood that the second information indicates accuracy of path information in first information associated with the second information. The first apparatus may determine, based on the indication information, that the second information indicates accuracy of path information in specific first information, to more properly determine, through analysis, whether a path identification solution needs to be improved and how to improve the path identification solution.

In a possible implementation, the indication information includes at least one of the following content: identification information of a sending apparatus of a reference signal on which the one or more pieces of first information (or referred to as first information associated with the second information) are based; identification information of a reference signal on which the one or more pieces of first information (or referred to as first information associated with the second information) are based; time information corresponding to the one or more pieces of first information (or referred to as first information associated with the second information); time range information corresponding to the one or more pieces of first information (or referred to as first information associated with the second information); or measurement parameter information corresponding to the one or more pieces of first information.

In this way, the location management apparatus may associate the second information with first information within specific time or a specific time range by using the indication information, or associate the second information with a sending apparatus of one or more reference signals, to assist the first apparatus in evaluating a channel environment within specific time or a specific time range, or between the first apparatus and the sending apparatus of the one or more reference signals, and then evaluate a path identification solution, to determine whether the path identification solution needs to be changed.

In a possible implementation, the plurality of pieces of first information meet one or more of the following content: sending apparatuses of reference signals on which the plurality of pieces of first information are based are the same, or sending apparatuses of reference signals on which two pieces of first information in the plurality of pieces of first information are based are different; time corresponding to the plurality of pieces of first information are the same, or time corresponding to two pieces of first information in the plurality of pieces of first information are different; time ranges corresponding to the plurality of pieces of first information are the same, or time ranges corresponding to two pieces of first information in the plurality of pieces of first information are different; or measurement parameters corresponding to the plurality of pieces of first information are the same, or measurement parameters corresponding to two pieces of first information in the plurality of pieces of first information are different.

The location management apparatus may comprehensively consider a plurality of pieces of first information that meet a specific rule (for example, a plurality of pieces of first information at same time, a plurality of pieces of first information including different measurement parameters, or a plurality of pieces of first information at different time), to determine accuracy of the path information more accurately. In addition, the location management apparatus feeds back one piece of second information to the first apparatus, to indicate accuracy of a plurality of pieces of path information in the plurality of pieces of first information, so that a quantity of bits occupied by the information fed back by the location management apparatus can be reduced, thereby saving resources.

In a possible implementation, the first information in the at least one piece of first information includes one or more of the following content: identification information of a sending apparatus of a reference signal on which the first information is based; identification information of a reference signal on which the first information is based; time information corresponding to the first information; time range information corresponding to the first information; or measurement parameter information corresponding to the first information.

Because the first information includes the information, the location management apparatus may directly obtain the information from the first information, and add the information to the second information, so that the first apparatus determines an association relationship between the second information and the first information and/or the sending apparatus of the reference signal.

The solutions provided in this application are applicable to a plurality of scenarios, for example, a positioning scenario between a terminal apparatus and a network apparatus, or a sidelink (sidelink) positioning scenario. For example, when the first apparatus is a network apparatus, the measurement information indicates a measurement result obtained by the network apparatus by measuring a reference signal from a first terminal apparatus. In a possible implementation, the location management apparatus may receive measurement information reported by a plurality of network apparatuses, and the location management apparatus may know location information of these network apparatuses. Therefore, the location management apparatus may determine location information of the first apparatus based on the plurality of pieces of measurement information and the location information of these network apparatuses, and then check, based on the location information of these first apparatuses, path information that is in the at least one piece of first information and that is reported by the first apparatus, so that accuracy of the path information can be accurately obtained.

In an actual application, the location management apparatus may also use some other methods to obtain the location information of the first apparatus. For example, the location management apparatus may obtain the location information of the first apparatus based on historical location information of the first apparatus (for example, the historical location information of the first apparatus is used as the location information of the first apparatus, or the location information of the first apparatus is estimated based on the historical location information of the first apparatus and some motion parameters of the first apparatus), or may obtain the location information of the first apparatus based on preset location information of the first location (for example, a possible location of the first apparatus in a specified time range is a preset location, and therefore the location management apparatus may use information about the location as the location information of the first apparatus), and then the location management apparatus checks the path information based on the location information.

For another example, when the first apparatus is a first terminal apparatus, the measurement information indicates a measurement result obtained by the first terminal apparatus by measuring a reference signal from a network apparatus. In a possible implementation, the first terminal apparatus may receive reference signals from a plurality of network apparatuses, and then measure the plurality of reference signals, to obtain measurement information corresponding to the plurality of network apparatuses. Because the location management apparatus may learn of location information of the plurality of network apparatuses in advance, the location management apparatus may check path information that is in the at least one piece of first information and that is reported by the first apparatus. For example, the location management apparatus may check, based on the plurality of pieces of measurement information and the location information of the network apparatus, the path information that is in the at least one piece of first information and that is reported by the first apparatus, so that accuracy of the path information can be accurately obtained.

For another example, when the first apparatus is a first terminal apparatus, the measurement information indicates a measurement result obtained by the first terminal apparatus by measuring a reference signal from a second terminal apparatus. In this implementation, if an apparatus that needs to be positioned is the first terminal apparatus, the location management apparatus may learn of, in advance by using another solution, location information of the second terminal apparatus participating in positioning (for example, the second terminal apparatus obtains the location information based on a global positioning system (global positioning system, GPS)/BeiDou satellite signal, and the second terminal apparatus sends the location information to the location management apparatus), and then determine a location of the first terminal apparatus based on the location information of the second terminal apparatus and the measurement information. If an apparatus that needs to be positioned is the second terminal apparatus, the location management apparatus may learn of location information of the first terminal apparatus in advance by using another solution, and then determine a location of the second terminal apparatus based on location information of one or more first terminal apparatuses and the measurement information.

In a possible implementation, the second information includes information indicating correct path information, or information indicating incorrect path information. In this solution, because the location management apparatus needs to determine correct or incorrect path information, complexity of an algorithm required in this solution is low. Therefore, in a scenario in which there are a large quantity of users in a network, computing load of the network can be reduced.

In a possible implementation, the second information includes one or more of the following content: information indicating a correctness probability of path information, information indicating an incorrectness probability of path information, or information indicating an error of the path information. In this way, the second information may assist the first apparatus in more accurately determining accuracy of path information identified in a current path identification solution, thereby better assisting the first apparatus in improving the path identification solution.

In a possible implementation, the at least one piece of first information includes a plurality of pieces of first information. The second information includes one or more of the following content: information indicating a proportion of correct path information in a plurality of pieces of path information in the plurality of pieces of first information; information indicating a proportion of incorrect path information in a plurality of pieces of path information in the plurality of pieces of first information; information indicating a proportion of path information whose correctness probabilities are greater than a first probability threshold in a plurality of pieces of path information in the plurality of pieces of first information; or information indicating a proportion of path information whose errors are less than a first error threshold in a plurality of pieces of path information in the plurality of pieces of first information. In this way, the location management apparatus may feed back accuracy of path information in batches, thereby reducing an amount of information that needs to be fed back, and saving resource overheads. In addition, the location management apparatus may perform batch determining on the path information in the first information, so that determining accuracy can be improved.

In a possible implementation, the second information includes one or more of the following content: information indicating that check on a location obtained based on the first information in the at least one piece of first information succeeds or fails. In this solution, because the location management apparatus needs to determine whether check on the location succeeds, complexity of an algorithm required in this solution is low. Therefore, in a scenario in which there are a large quantity of users in a network, computing load of the network can be reduced.

In a possible implementation, the second information includes one or more of the following content: information indicating a probability that check on a location obtained based on the first information in the at least one piece of first information succeeds; information indicating a probability that check on a location obtained based on the first information in the at least one piece of first information fails; or information indicating an error of a location obtained based on the first information. In this way, the second information may assist the first apparatus in more accurately determining accuracy of path information identified in a current path identification solution, thereby better assisting the first apparatus in improving the path identification solution.

In a possible implementation, the second information includes one or more of the following content: information indicating a proportion of locations on which check succeeds in a plurality of locations obtained based on the at least one piece of first information; information indicating a proportion of locations on which check fails in a plurality of locations obtained based on the at least one piece of first information; or information indicating a proportion of locations whose errors are less than a second error threshold in a plurality of locations obtained based on the at least one piece of first information. In this way, the location management apparatus may feed back accuracy of path information in batches, thereby reducing an amount of information that needs to be fed back, and saving resource overheads. In addition, the location management apparatus may perform batch determining on the path information in the first information, so that determining accuracy can be improved.

In a possible implementation, the first apparatus may further improve a path identification solution based on the second information. For example, the first apparatus is notified to perform one or more of the following content based on the second information: increasing a first-path energy detection threshold, increasing a consistency decision threshold, switching an LOS path identification algorithm, or switching an NLOS path identification algorithm. In this way, the first apparatus can improve accuracy of subsequent path information, thereby improving positioning accuracy.

According to a second aspect, this application provides a positioning information transmission method, and the method may be applied to a location management apparatus. For example, the location management apparatus may be a location management device or a chip (system) in the location management device; or the location management apparatus may be a terminal device having a positioning capability or a chip (system) in the terminal device, or a network device or a chip (system) in the network device.

In this application, the location management apparatus receives at least one piece of first information, where the at least one piece of first information is used for positioning, first information in the at least one piece of first information includes measurement information and path information, the measurement information indicates a measurement result obtained based on a reference signal, and the path information indicates a likelihood that a path corresponding to the measurement information is an LOS path and/or an NLOS path. The location management apparatus sends second information, where the second information indicates accuracy of path information in one or more pieces of first information in the at least one piece of first information.

The second information may assist an apparatus (a first apparatus) that receives the second information in improving a path identification solution and improving path identification performance. The first apparatus may more accurately determine the likelihood indicating that the path corresponding to the measurement information is an LOS path and/or an NLOS path, thereby improving positioning performance.

In a possible implementation, the second information further includes indication information, and the indication information indicates that the second information has an association relationship with one or more pieces of first information in the at least one piece of first information. For related content, refer to the descriptions in the first aspect. Details are not described again.

In a possible implementation, the indication information includes at least one of the following content: time information corresponding to the one or more pieces of first information; time range information corresponding to the one or more pieces of first information; identification information of a sending apparatus of a reference signal on which the one or more pieces of first information are based; or measurement parameter information corresponding to the one or more pieces of first information. For related content, refer to the descriptions in the first aspect. Details are not described again.

In a possible implementation, the plurality of pieces of first information meet one or more of the following content: sending apparatuses of reference signals on which the plurality of pieces of first information are based are the same, or sending apparatuses of reference signals on which two pieces of first information in the plurality of pieces of first information are based are different; time corresponding to the plurality of pieces of first information are the same, or time corresponding to two pieces of first information in the plurality of pieces of first information are different; time ranges corresponding to the plurality of pieces of first information are the same, or time ranges corresponding to two pieces of first information in the plurality of pieces of first information are different; or measurement parameters corresponding to the plurality of pieces of first information are the same, or measurement parameters corresponding to two pieces of first information in the plurality of pieces of first information are different. For related content, refer to the descriptions in the first aspect. Details are not described again.

In a possible implementation, the first information in the at least one piece of first information includes one or more of the following content: identification information of a sending apparatus of a reference signal on which the first information is based; identification information of a reference signal on which the first information is based; time information corresponding to the first information; time range information corresponding to the first information; or measurement parameter information corresponding to the first information. For related content, refer to the descriptions in the first aspect. Details are not described again.

In a possible implementation, the second information includes one or more of the following content: information indicating correct path information, or information indicating incorrect path information; information indicating a correctness probability of path information; information indicating an incorrectness probability of path information; information indicating an error of path information; information indicating a proportion of correct path information in a plurality of pieces of path information in the at least one piece of first information; information indicating a proportion of incorrect path information in a plurality of pieces of path information in the at least one piece of first information; information indicating a proportion of path information whose correctness probabilities are greater than a first probability threshold in a plurality of pieces of path information in the at least one piece of first information; or information indicating a proportion of path information whose errors are less than a first error threshold in a plurality of pieces of path information in the at least one piece of first information. For related content, refer to the descriptions in the first aspect. Details are not described again.

In a possible implementation, the second information includes one or more of the following content: information indicating that check on a location obtained based on the first information in the at least one piece of first information succeeds or fails; information indicating a probability that check on a location obtained based on the first information in the at least one piece of first information succeeds; information indicating a probability that check on a location obtained based on the first information in the at least one piece of first information fails; information indicating an error of a location obtained based on the first information; information indicating a proportion of locations on which check succeeds in a plurality of locations obtained based on the at least one piece of first information; information indicating a proportion of locations on which check fails in a plurality of locations obtained based on the at least one piece of first information; or information indicating a proportion of locations whose errors are less than a second error threshold in a plurality of locations obtained based on the at least one piece of first information. For related content, refer to the descriptions in the first aspect. Details are not described again.

In a possible implementation, when the first apparatus is a network apparatus, the measurement information indicates a measurement result obtained by the network apparatus by measuring a reference signal from a first terminal apparatus. In another possible implementation, when the first apparatus is a first terminal apparatus, the measurement information indicates a measurement result obtained by the first terminal apparatus by measuring a reference signal from a network apparatus, or a measurement result obtained by the first terminal apparatus by measuring a reference signal from a second terminal apparatus. For related content, refer to the descriptions in the first aspect. Details are not described again.

In a possible implementation, the second information is used by the first apparatus to perform one or more of the following content based on the second information: increasing a first-path energy detection threshold, increasing a consistency decision threshold, switching an LOS path identification algorithm, or switching an NLOS path identification algorithm. For related content, refer to the descriptions in the first aspect. Details are not described again.

In an actual application, a location determined based on measurement information obtained based on an LOS path is accurate. Therefore, locations obtained based on measurement information of the LOS path may be close (or referred to as being aggregated, or having a high aggregation degree). A location determined based on measurement information obtained based on an NLOS path is inaccurate. Therefore, locations obtained based on measurement information of the NLOS path may be discrete (or referred to as being non-aggregated, or having a low aggregation degree). In this application, accuracy of the path information may be determined based on this phenomenon, so that a solution can be simplified.

For example, the location management apparatus may determine at least one piece of first location information based on at least one piece of measurement information in the at least one piece of first information, and determine accuracy of the path information based on the at least one piece of first location information.

For another example, the location management apparatus may obtain at least one piece of second location information, and determine accuracy of the path information based on the at least one piece of first location information and the at least one piece of second location information. There is an association relationship between accuracy of path information and a first aggregation degree, and the first aggregation degree includes an aggregation degree between at least one piece of first location information and at least one piece of second location information. For example, when the path information indicates that a probability that the measurement information is measured based on an LOS path is greater than a third probability threshold, accuracy of the path information is positively correlated with the first aggregation degree. For another example, when the path information indicates that a probability that the measurement information is measured based on an LOS path is not greater than a third probability threshold, accuracy of the path information is negatively correlated with the first aggregation degree.

In another possible implementation, second location information in the at least one piece of second location information includes one or more of the following content: preset location information; historical location information; or location information determined based on at least one piece of other measurement information, where a probability that measurement information in the at least one piece of other measurement information is measured based on an LOS path is greater than a second probability threshold. In this way, solution flexibility can be improved.

According to a third aspect, an apparatus is provided. The apparatus may be the first apparatus or the location management apparatus. The apparatus may include a communication unit and a processing unit, to perform either of the first aspect and the second aspect, or perform any one of the possible implementations of the first aspect and the second aspect. The communication unit is configured to perform functions related to sending and receiving. Optionally, the communication unit includes a receiving unit and a sending unit. In a design, the apparatus is a communication chip, the processing unit may be one or more processors or processor cores, and the communication unit may be an input/output circuit or a port of the communication chip.

In another design, the communication unit may be a transmitter and a receiver, or the communication unit may be a transmitter machine and a receiver machine.

Optionally, the apparatus further includes modules that may be configured to perform either of the first aspect and the second aspect, or perform any one of the possible implementations of the first aspect and the second aspect.

According to a fourth aspect, an apparatus is provided. The apparatus may be the first apparatus or the location management apparatus. The apparatus may include a processor and a memory, to perform either of the first aspect and the second aspect, or perform any one of the possible implementations of the first aspect and the second aspect. Optionally, the apparatus further includes a transceiver. The memory is configured to store a computer program or instructions. The processor is configured to: invoke the computer program or the instructions from the memory and run the computer program or the instructions. When the processor executes the computer program or the instructions in the memory, the apparatus is enabled to perform either of the first aspect and the second aspect, or perform any one of the possible implementations of the first aspect and the second aspect.

Optionally, there are one or more processors, and there are one or more memories.

Optionally, the memory may be integrated with the processor, or the memory and the processor are disposed separately.

Optionally, the transceiver may include a transmitter machine (transmitter) and a receiver machine (receiver).

According to a fifth aspect, an apparatus is provided. The apparatus may be the first apparatus or the location management apparatus. The apparatus may include a processor, to perform either of the first aspect and the second aspect, or perform any one of the possible implementations of the first aspect and the second aspect. The processor is coupled to a memory. Optionally, the apparatus further includes the memory. Optionally, the apparatus further includes a communication interface, and the processor is coupled to the communication interface.

In an implementation, when the apparatus is a first apparatus or a location management apparatus, the communication interface may be a transceiver or an input/output interface. Optionally, the transceiver may be a transceiver circuit. Optionally, the input/output interface may be an input/output circuit.

In another implementation, when the apparatus is a chip or a chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a system is provided, and the system includes the first apparatus.

In a possible implementation, the system may further include a sending apparatus of one or more reference signals, and the sending apparatus of the reference signal may be referred to as a second apparatus. In another possible implementation, the system may further include one or more location management apparatuses.

According to a seventh aspect, a computer program product is provided. The computer program product includes a computer program (which may also be referred to as code or instructions). When the computer program is run, a computer is enabled to perform either of the first aspect and the second aspect, or perform any one of the possible implementations of the first aspect and the second aspect.

According to an eighth aspect, a computer-readable storage medium is provided. The computer-readable medium stores a computer program (which may also be referred to as code or instructions). When the computer program is run on a computer, the computer is enabled to perform either of the first aspect and the second aspect, or perform any one of the possible implementations of the first aspect and the second aspect.

According to a ninth aspect, a chip system is provided, and the chip system may include a processor. The processor is coupled to a memory, and may be configured to: perform either of the first aspect and the second aspect, or perform any one of the possible implementations of the first aspect and the second aspect. Optionally, the chip system further includes the memory. The memory is configured to store a computer program (which may also be referred to as code or instructions). The processor is configured to: invoke the computer program from the memory and run the computer program, so that a device on which the chip system is installed performs either of the first aspect and the second aspect, or performs any one of the possible implementations of the first aspect and the second aspect.

According to a tenth aspect, a processing apparatus is provided, and includes an interface circuit and a processing circuit. The interface circuit may include an input circuit and an output circuit. The processing circuit is configured to: receive a signal through the input circuit, and transmit a signal through the output circuit, so that either of the first aspect and the second aspect or any one of the possible implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In an implementation, when the apparatus is a first apparatus or a location management apparatus: The interface circuit may be a radio frequency processing chip in the first apparatus or the location management apparatus, and the processing circuit may be a baseband processing chip in the first apparatus or the location management apparatus.

In another implementation, the apparatus may be some components in the first apparatus or the location management apparatus, for example, an integrated circuit product such as a system chip or a communications chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a diagram of an architecture of a communication system according to an embodiment of this application;
FIG. 2A is a diagram of an architecture of another communication system according to an embodiment of this application;
FIG. 2B is a diagram of an architecture of another communication system to which an embodiment of this application is applicable;
FIG. 2C is a diagram of an architecture of another communication system to which an embodiment of this application is applicable;
FIG. 2D is a diagram of an architecture of another communication system to which an embodiment of this application is applicable;
FIG. 3A is a diagram of an architecture of another communication system to which an embodiment of this application is applicable;
FIG. 3B is a diagram of an architecture of another communication system to which an embodiment of this application is applicable;
FIG. 3C is a diagram of an architecture of another communication system to which an embodiment of this application is applicable;
FIG. 3D is a diagram of an architecture of another communication system to which an embodiment of this application is applicable;
FIG. 4 is a schematic flowchart of a positioning information transmission method according to an embodiment of this application;
FIG. 5 is a diagram of a structure of a communication apparatus according to an embodiment of this application;
FIG. 6 is a diagram of a structure of a communication apparatus according to an embodiment of this application; and
FIG. 7 is a diagram of a structure of a communication apparatus according to an embodiment of this application.

### DESCRIPTION OF EMBODIMENTS

The following first describes nouns or terms in embodiments of this application.

### (1) Reference signal

The reference signal in embodiments of this application may also be understood as a signal that can be used for positioning. The reference signal in embodiments of this application may also be referred to as a signal, a positioning signal, a positioning reference signal, a signal used for positioning, or the like.

The reference signal in embodiments of this application may be a positioning reference signal (positioning reference signal, PRS), may be a sounding reference signal (sounding reference signal, SRS), or may be one or more of a channel state information reference signal (channel state information reference signal, CSI-RS), a demodulation reference signal (demodulation reference signal, DMRS), a phase-tracking reference signal (phase-tracking reference signal, PTRS), a sidelink positioning reference signal (sidelink positioning reference signal, SL-PRS), and a synchronization signal and physical sidelink broadcast channel block (synchronization signal and physical sidelink broadcast channel block, SSB).

The solutions provided in embodiments of this application are applicable to a scenario in which a reference signal is transmitted between a first apparatus and a second apparatus. For example, the first apparatus measures a reference signal from the second apparatus, and a measurement result may be used for positioning. The first apparatus and the second apparatus may be respectively a terminal device (or a chip in the terminal device) and a network device (or a chip in the network device). Alternatively, both the first apparatus and the second apparatus are terminal devices (or chips in the terminal devices). In this case, it may be understood that the solutions provided in embodiments of this application are also applicable to a sidelink (sidelink).

The sidelink (sidelink, SL) in embodiments of this application may also be referred to as a sidelink, a sidelink, a direct link, a sidelink, a secondary link, or the like. In embodiments of this application, all the foregoing terms refer to a link established between devices of a same type, and have a same meaning. Devices of a same type may be a link between terminal devices, or the like. For the link between the terminal devices, there is a D2D link defined in 3GPP release (Rel)-12/13, and there is also a V2X link that is between vehicles, between a vehicle and a mobile phone, or between a vehicle and any entity and that is defined by the 3GPP for the internet of vehicles. The V2X link includes a V2X link defined in 3GPP Rel-14/15, and further includes, for example, a V2X link based on an NR system in Rel-16 and subsequent releases that are currently being researched by the 3GPP.

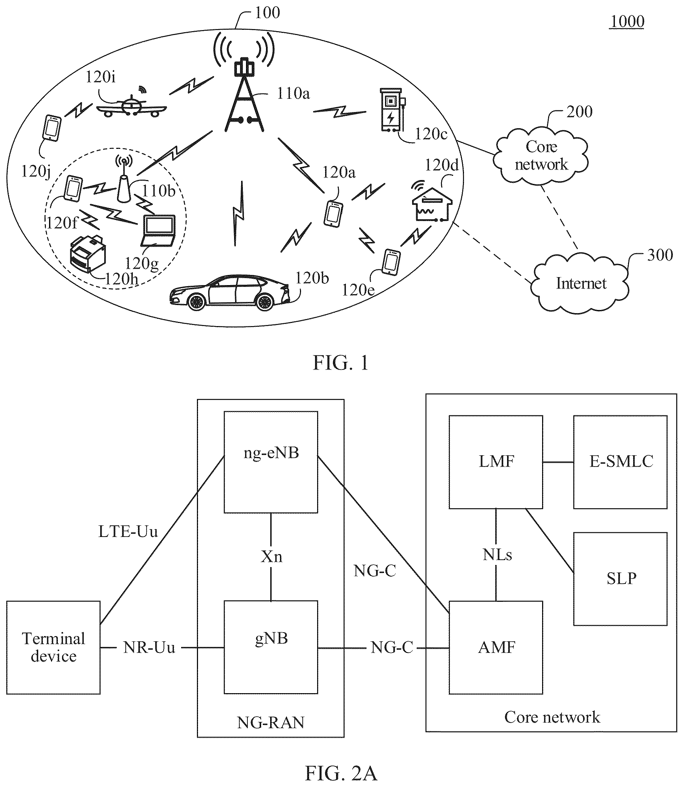

FIG. 1 shows an example of a diagram of an architecture of a communication system 1000 to which an embodiment of this application is applicable. As shown in FIG. 1, the communication system includes a radio access network 100 and a core network 200. Optionally, the communication system 1000 may further include the internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and a radio access network device may be different independent physical devices, or functions of the core network device and logical functions of the radio access network device may be integrated into a same physical device, or a part of functions of the core network device and a part of functions of the radio access network device may be integrated into one physical device. Terminal devices may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device, which are not shown in FIG. 1.

The network device in embodiments of this application includes, for example, a radio access network (radio access network, RAN) device. The radio access network device may be a base station (base station), an evolved NodeB (evolved NodeB, eNodeB), a transmission reception point (transmission reception point, TRP), a transmission point (transmission point, TP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes a part of functions of a base station, for example, may be a central unit (central unit, CU) or a distributed unit (distributed unit, DU). Herein, the CU completes functions of a radio resource control protocol and a packet data convergence layer protocol (packet data convergence protocol, PDCP) of the base station, and may further complete a function of a service data adaptation protocol (service data adaptation protocol, SDAP); and the DU completes functions of a radio link control layer and a medium access control (medium access control, MAC) layer of the base station, and may further complete a function of some or all physical layers. For specific descriptions of the foregoing protocol layers, refer to related technical specifications of the 3rd generation partnership project (3rd generation partnership project, 3GPP).

The radio access network device may be a macro base station (for example, 110a in FIG. 1), or may be a micro base station or an indoor base station (for example, 110b in FIG. 1), or may be a relay node or a donor node. A specific technology and a specific device form that are used by the radio access network device are not limited in embodiments of this application. For ease of description, the following provides descriptions by using an example in which the radio access network device is a base station.

The terminal device may also be referred to as a terminal, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart household device, a sensor, or the like. A specific technology and a specific device form that are used by the terminal device are not limited in embodiments of this application.

The terminal device may establish a connection to an operator network through an interface (for example, N1) provided by the operator network, to use services such as data and/or voice provided by the operator network. The terminal device may further access a domain name system (domain name system, DNS) through the operator network, to use an operator service deployed in the DNS and/or a service provided by a third party. The third party may be a service party other than the operator network and the terminal device, and may provide another data and/or voice service and the like for the terminal device. A specific representation form of the third party may be specifically determined based on an actual application scenario, and is not limited herein.

The terminal device may also be referred to as a terminal, a user equipment (user equipment, UE), a mobile station, a mobile terminal device, or the like. The terminal device may be widely used in various scenarios, for example, device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, autonomous driving, telemedicine, a smart grid, smart furniture, a smart office, a smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robot arm, a smart household device, a roadside unit (roadside unit, RSU), or the like. A specific technology and a specific device form that are used by the terminal device are not limited in embodiments of this application. The RSU may be a roadside unit, a device, or an apparatus that is deployed on a roadside, meets a sidelink communication/positioning related protocol, and provides a wireless communication function for a terminal device (such as a vehicle). The RSU may be a roadside station, an access point, a sidelink device, or the like in various forms.

The base station and the terminal device may be fixed or movable. The base station and the terminal device may be deployed on land, including indoor, outdoor, handheld, or in-vehicle forms; or may be deployed on water; or may be deployed on airplanes, balloons, and artificial satellites in air. Application scenarios of the base station and the terminal device are not limited in embodiments of this application.

Roles of the base station and the terminal device may be relative. For example, a helicopter or uncrewed aerial vehicle 120i in FIG. 1 may be configured as a mobile base station. For those terminal devices 120j accessing the radio access network 100 via 120i, the terminal device 120i is a base station. However, for the base station 110a, 120i is a terminal device, that is, communication between 110a and 120i is performed according to a wireless air interface protocol. Certainly, communication between 110a and 120i may alternatively be performed according to an interface protocol between base stations. In this case, for 110a, 120i is also a base station. Therefore, the base station and the terminal device may be collectively referred to as a communication apparatus, 110a and 110b in FIG. 1 may be referred to as a communication apparatus having a base station function, and 120a to 120j in FIG. 1 may be referred to as a communication apparatus having a terminal device function.

Communication between a base station and a terminal device, between base stations, and between terminal devices may be performed through a licensed spectrum, an unlicensed spectrum, or both a licensed spectrum and an unlicensed spectrum, which may be performed through a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal device may also be performed by a module (for example, a chip or a modem) in the terminal device, or may be performed by an apparatus including a function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell that establishes the wireless connection to the terminal device is referred to as a serving cell of the terminal device. When communicating with the serving cell, the terminal device is further interfered with by a signal from a neighboring cell.

The core network in embodiments of this application may include a network device that processes and forwards signaling and data of a user, for example, including core network devices such as an access and mobility management function (access and mobility management function, AMF), a session management function (session management function, SMF), a user plane gateway, and a location management device. The user plane gateway may be a server that has functions such as mobility management, routing, and forwarding specific to user plane data, and is generally located on a network side, such as a serving gateway (serving gateway, SGW), a packet data network gateway (packet data network gateway, PGW), or a user plane function (user plane function, UPF). The AMF and the SMF are equivalent to a mobility management entity (mobility management entity, MME) in a long term evolution (long term evolution, LTE) system. The AMF is mainly responsible for admission, and the SMF is mainly responsible for session management. Certainly, the core network may further include other network elements, which are not listed one by one herein.

The location management device has a positioning function. The location management device in embodiments of this application may include a location management function (location management function, LMF) or a location management component (location management component, LMC), or may be a local location management function (local location management function, LLMF) located in a network device, or a positioning server. This is not limited in embodiments of this application. For ease of description, the following embodiments are described by using an example in which the location management device is an LMF.

Based on the content shown in FIG. 1, FIG. 2A shows an example of a diagram of an architecture of a communication system to which an embodiment of this application is applicable. The communication system is shown by using positioning architectures in LTE and NR Rel-16 as an example. As shown in FIG. 2A, network elements/modules mainly include three parts: a next generation radio access network (next generation radio access network, NG RAN), a terminal device, and a core network.

The core network includes a location management function (location management function, LMF), an access and mobility management function (access and mobility management function, AMF), a service location protocol (service location protocol, SLP), an evolved serving mobile location center (evolved serving mobile location center, E-SMLC), and the like. A location server, namely, the location management function (location management function, LMF), is connected to the AMF, and the LMF and the AMF are connected through an NLs interface. A UE communicates with a serving base station through a Uu link. An ng-eNB is an LTE base station, and a gNB is an NR base station. The base stations communicate with each other through an Xn interface. The base station communicates with the AMF through an NG-C interface. The AMF (Access and Mobility Management Function, access and mobility management unit) is equivalent to a router for communication between the gNB and the LMF. The LMF implements location estimation of the UE, and the AMF communicates with the LMF through an NLs interface. The LMF is responsible for supporting different types of location services related to the terminal device, including positioning the terminal device and transferring assistance data to the terminal device. The LMF may perform positioning calculation on the terminal device based on a measurement result of another network element. The AMF may receive a terminal device-related location service request from a 5th generation core network location service (5th generation core network location service, 5GC LCS) entity, or the AMF may start some location services on behalf of a specific terminal device, and forward the location service request to the LMF. After obtaining location information returned by the terminal device, the AMF returns the related location information to the 5GC LCS entity.

The NG RAN may include a next generation NodeB (next generation NodeB, gNB), a next generation evolved NodeB (next generation evolved NodeB, ng-eNB), and the like. The gNB and the ng-eNB are connected through an Xn interface, and the LMF and the ng-eNB/gNB are connected through an NG-C interface.

One or more network devices on an NG RAN side configure a resource used to send a reference signal, and send the reference signal to the terminal device. The terminal device measures a downlink signal such as the reference signal, and feeds back a measurement result to the LMF, to support positioning. It should be understood that the reference signal is used for positioning, and may also be referred to as a positioning reference signal. This specification is mainly for downlink positioning. Therefore, the positioning reference signal may be a PRS, a cell-common reference signal (common reference signal, CRS), a channel state information (channel state information, CSI)-RS, or the like. In this specification, an example in which the positioning reference signal is a PRS is used for description. For a manner of another reference signal, refer to the example. Details are not described herein again. In a possible implementation, the PRS resource may be configured based on a cell level, in other words, a PRS resource is configured for each cell. After the terminal device re-establishes a radio resource control (radio resource control, RRC) connection to a target cell, a base station of the target cell may configure a PRS resource for the target cell, and the terminal device obtains the PRS resource configured for the target cell, to receive and measure a PRS on the PRS resource.

A communication method provided in embodiments of this application may be applied to various communication systems, for example, an LTE system, a 5th generation (5th generation, 5G) system such as NR, and a next generation communication system such as a 6G system. Certainly, the technical solutions in embodiments of this application may also be applied to another communication system, provided that the communication system has a positioning requirement for a terminal device. In addition, the communication system is further applicable to a future-oriented communication technology. The systems described in embodiments of this application are intended to describe the technical solutions in embodiments of this application more clearly, and constitute no limitation on the technical solutions provided in embodiments of this application. A person of ordinary skill in the art may learn that, with evolution of a network architecture, the technical solutions provided in embodiments of this application are also applicable to a similar technical problem.

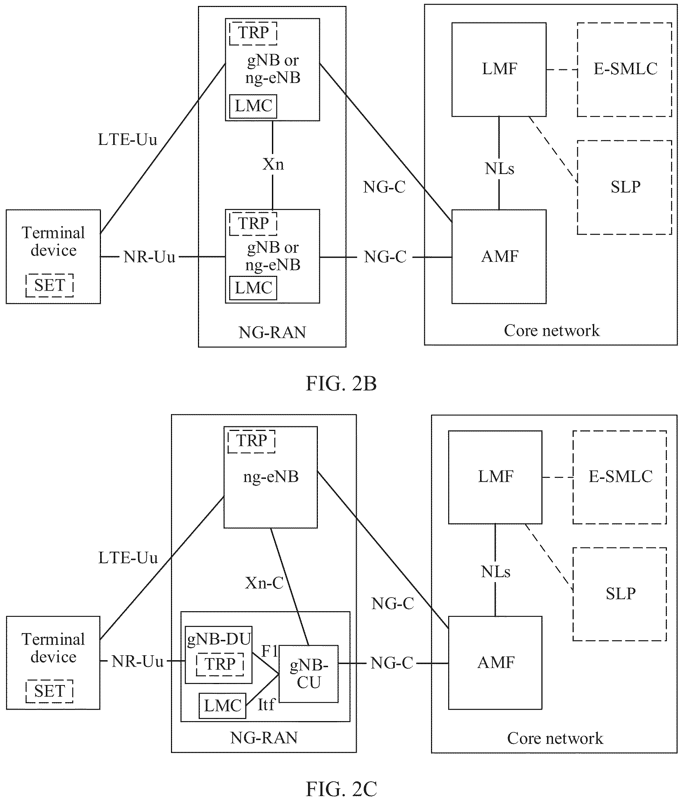

FIG. 2B shows a network architecture of another communication system to which an embodiment of this application is applicable. The communication system includes a core network, an NG-RAN, and a terminal device. The core network includes network elements/modules such as an LMF, an AMF, a secure user plane location (secure user plane location, SUPL) location platform (SUPL location platform, SLP), and an enhanced serving mobile location center (enhanced serving mobile location center, E-SMLC). The NG RAN includes network elements/modules such as a gNB and a ng-eNB. For specific functions of the network elements/modules such as the LMF, the AMF, the SLP, the E-SMLC, the gNB, and the ng-eNB and connection relations between the network elements/modules, refer to descriptions of a related part in FIG. 2A above. Details are not described herein again.

A difference from FIG. 2A lies in that, in the network architecture shown in FIG. 2B, an LMC is added to the NG-RAN, and a specific deployment manner of the LMC is being disposed in a base station, for example, disposed in the gNB or the ng-ENB. In this network architecture, the LMC serves as an internal function of the base station. Therefore, no new interface needs to be introduced. The LMC may undertake some functions of the LMF. In this architecture, the gNB may not report a measurement result of a signal used for positioning to the LMF in the core network, to reduce signaling overheads and reduce a positioning delay.

FIG. 2C shows a network architecture of another communication system to which an embodiment of this application is applicable. As shown in FIG. 2C, the communication system also includes a core network, an NG-RAN, and a terminal device. A difference from FIG. 2B lies in that, an LMC in the network architecture shown in FIG. 2C serves as an independent logical node in the NG-RAN, and is connected to a base station through a new interface. For example, in FIG. 2C, the LMC is connected to a gNB-CU through an interface Itf.

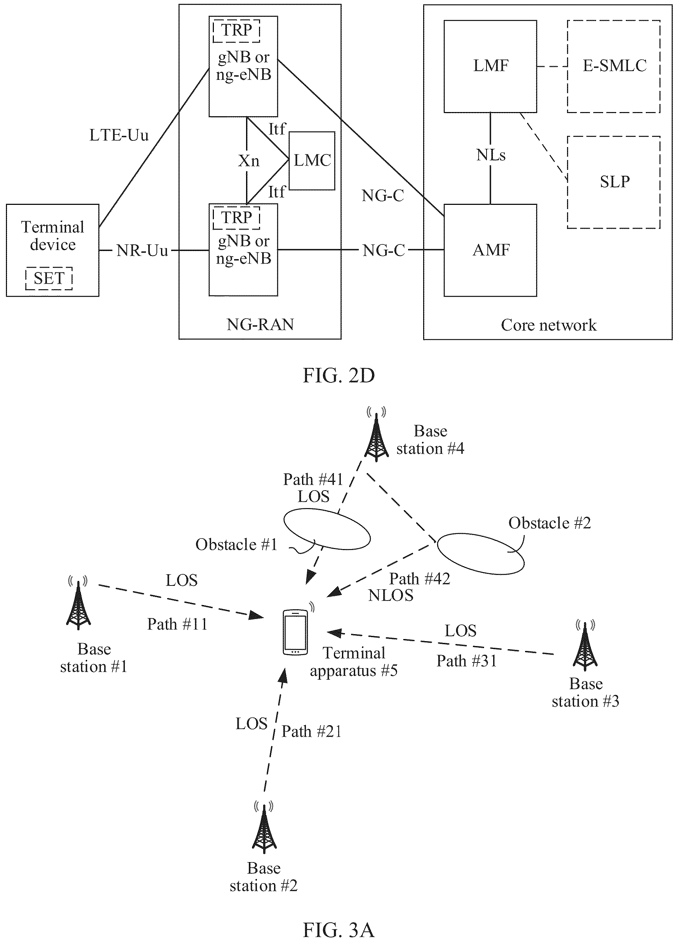

FIG. 2D shows a network architecture of another communication system to which an embodiment of this application is applicable. As shown in FIG. 2D, the communication system also includes a core network, an NG-RAN, and a terminal device. An LMC serves as an independent logical node in the NG-RAN. A difference from FIG. 2C lies in that, the LMC may be connected to a plurality of base stations through new interfaces in FIG. 2D. In FIG. 2D, an example in which the LMC is connected to two base stations is used. In a specific implementation, the LMC may alternatively be connected to more base stations.

It should be understood that FIG. 2A, FIG. 2B, FIG. 2C, and FIG. 2D show examples for describing the communication systems to which embodiments of this application are applicable, and do not specifically limit types, quantities, connection manners, and the like of network elements included in the communication systems to which this application is applicable. In addition, the network element/module shown by a dashed line in FIG. 2A, FIG. 2B, FIG. 2C, and FIG. 2D is not mandatory, and is optional. For example, the E-SMLC or the SLP is not mandatory. Alternatively, the network element/module shown by a dashed line is in another existence form. For example, the gNB or the ng-eNB is also referred to as a transmission reception point node (transmission reception point, TRP) in some embodiments, and the terminal device is referred to as an SUPL enabled terminal (SUPL enabled terminal, SET) in some embodiments, where SUPL is short for secure user plane location (secure user plane location, SUPL).

FIG. 3A shows an example of a diagram of a network architecture of another communication system according to an embodiment of this application. As shown in FIG. 3A, the communication system includes a network apparatus (for example, the network apparatus is a base station in FIG. 3A) and a terminal apparatus. The network apparatus (for example, a base station #1, a base station #2, a base station #3, and a base station #4 shown in FIG. 3A) may be the access network device or the chip (system) in the access network device shown in FIG. 1, FIG. 2A, FIG. 2B, FIG. 2C, and FIG. 2D, and the terminal apparatus (for example, the terminal apparatus is a terminal apparatus #5 in FIG. 3A) may be the terminal device or the chip (system) in the terminal device shown in FIG. 1, FIG. 2A, FIG. 2B, FIG. 2C, and FIG. 2D.

With reference to FIG. 3A, for example, the base station #1, the base station #2, the base station #3, and the base station #4 each send a reference signal to the terminal apparatus #5, and the terminal apparatus #5 measures the reference signal. The terminal apparatus #5 measures a path #11 of a reference signal from the base station #1, to obtain measurement information #11. In FIG. 3A, for example, a path (that is, the path #11) corresponding to the measurement information #11 is an LOS path. The terminal apparatus #5 measures a path #21 of a reference signal from the base station #2, to obtain measurement information #21. In FIG. 3A, for example, a path (that is, the path #21) corresponding to the measurement information #21 is an LOS path. The terminal apparatus #5 measures a path #31 of a reference signal from the base station #3, to obtain measurement information #31. In FIG. 3A, for example, a path (that is, the path #31) corresponding to the measurement information #31 is an LOS path. The terminal apparatus #5 measures a path #41 of a reference signal from the base station #4, to obtain measurement information #41. The terminal apparatus #5 measures a path #42 of a reference signal from the base station #4, to obtain measurement information #42. In FIG. 3A, for example, a path (that is, the path #41) corresponding to the measurement information #41 is an LOS path, and a path (that is, the path #42) corresponding to the measurement information #42 is an NLOS path.

In FIG. 3A, an obstacle #1 exists in the path #41, and the path #42 is obtained by reflecting the reference signal from the base station #4 via an obstacle #2. Because the path #41 is blocked by the obstacle #1, the terminal apparatus #5 may identify the path #42 as an LOS path by mistake (for example, the terminal apparatus #5 finds that signal energy on the path #42 is higher than signal energy on the path #41, and consequently, the terminal apparatus #5 identifies the path #42 as an LOS path).

The terminal apparatus #5 reports measurement information to a location management apparatus, and also reports path information corresponding to the measurement information to the location management apparatus, where the path information indicates a likelihood that a path corresponding to the measurement information is an LOS path and/or an NLOS path. For example, path information that corresponds to the measurement information #42 and that is reported by the terminal apparatus #5 indicates a high likelihood that the path #42 corresponding to the measurement information #42 is an LOS path, for example, may be 90%. Because the path #42 corresponding to the measurement information #42 is identified as an LOS path, when performing positioning based on the measurement information #42, the location management apparatus may assign a large weight to the measurement information #42. As a result, the measurement information #42 has large impact on location information of the terminal apparatus #5, and location information that is of the terminal apparatus #5 and that is obtained by the location management apparatus based on the measurement information #42 deviates greatly from actual location information of the terminal apparatus #5. Consequently, positioning accuracy decreases.

Based on this, this embodiment of this application provides a solution. In this solution, the location management apparatus may feed back path identification accuracy, to assist a first apparatus (for example, the terminal apparatus #5 in FIG. 3A) in improving a path identification solution, thereby improving path identification accuracy. The first apparatus may more accurately determine a likelihood that a path corresponding to measurement information is an LOS path and/or an NLOS path, thereby improving positioning accuracy.

Beneficial effects of the solution are described by using an example. For example, if the first apparatus can accurately determine a likelihood that a path corresponding to measurement information is an LOS path and/or an NLOS path, in the foregoing example, the path information that corresponds to the measurement information #42 and that is reported by the first apparatus indicates a low likelihood that the path #42 corresponding to the measurement information #42 is an LOS path, for example, may be 10%. When performing positioning based on the measurement information #42, the location management apparatus may assign a small weight to the measurement information #42 (or determine not to use the measurement information for positioning), and the measurement information has small impact on a determined location of the terminal apparatus #5, thereby improving positioning accuracy.

In FIG. 3A, for example, the terminal apparatus #5 receives reference signals from a plurality of base stations. In a scenario to which this embodiment of this application is applied, there may be one base station that sends a reference signal to the terminal apparatus #5.

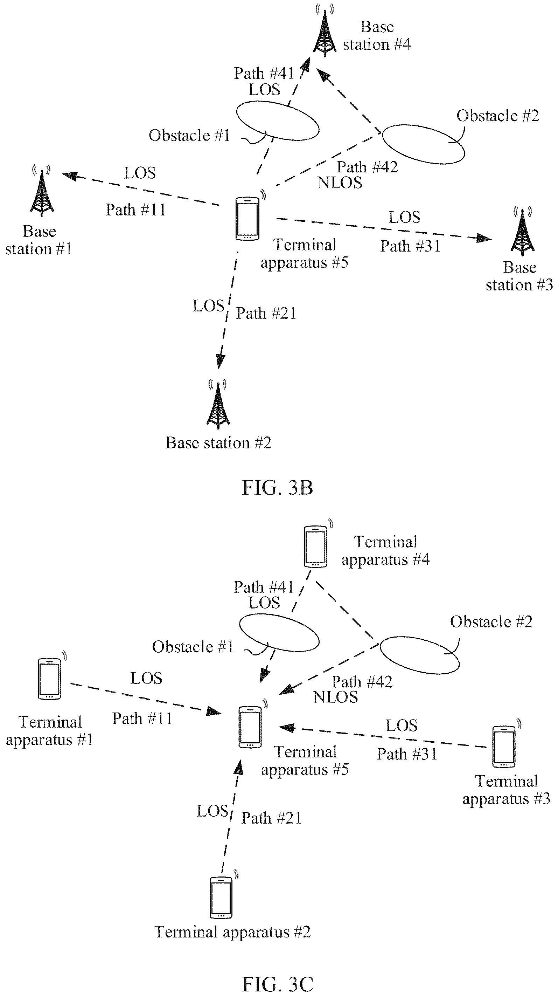

FIG. 3B shows an example of a diagram of a network architecture of another communication system according to an embodiment of this application. As shown in FIG. 3B, the communication system includes a network apparatus (for example, the network apparatus is a base station in FIG. 3B) and a terminal apparatus. A difference between FIG. 3A and FIG. 3B lies in:

In FIG. 3A, descriptions are provided by using an example in which a terminal apparatus #5 measures a reference signal from a base station, and the terminal apparatus #5 reports measurement information and path information to a location management apparatus. In the scenario shown in FIG. 3B, a terminal apparatus #5 may send a reference signal, and a base station #1, a base station #2, a base station #3, and a base station #4 may measure the received reference signal from the terminal apparatus #5. One or more of the base station #1, the base station #2, the base station #3, and the base station #4 may be considered as a first apparatus, and the first apparatus (for example, the base station #4) measures the received reference signal to obtain measurement information and path information, and reports the measurement information and the path information to a location management apparatus, and then the location management apparatus feeds back, to the first apparatus (for example, the base station #4), information indicating accuracy of the path information, to assist the first apparatus (for example, the base station #4) in improving path identification performance, and more accurately determining a likelihood that a path corresponding to the measurement information is an LOS path and/or an NLOS path. Other content in FIG. 3C is similar to content in FIG. 3A. Details are not described again.

In FIG. 3B, for example, the plurality of base stations receive the reference signal from the terminal apparatus #5. In an application scenario in this embodiment of this application, the reference signal from the terminal apparatus #5 is received and measured, and there may be one base station that reports measurement information and path information.

FIG. 3C shows an example of a diagram of a network architecture of another communication system according to an embodiment of this application. As shown in FIG. 3C, the communication system includes a terminal apparatus, and the terminal apparatus may be the terminal device or the chip (system) in the terminal device shown in FIG. 1, FIG. 2A, FIG. 2B, FIG. 2C, and FIG. 2D.

A difference between FIG. 3A and FIG. 3C may include: In the scenario shown in FIG. 3C, a reference signal is transmitted between terminal apparatuses. In this scenario, a terminal apparatus #5 may receive reference signals from a terminal apparatus #1, a terminal apparatus #2, a terminal apparatus #3, and a terminal apparatus #4. The terminal apparatus #5 may be considered as a first apparatus. The terminal apparatus #5 measures the received reference signal to obtain measurement information and path information, and reports the measurement information and path information to a location management apparatus. Then, the location management apparatus feeds back, to the terminal apparatus #5, information indicating accuracy of the path information, to assist the base station in improving path identification performance, and more accurately determining a likelihood that a path corresponding to the measurement information is an LOS path and/or an NLOS path.

Other content in FIG. 3C is similar to content in FIG. 3A. Details are not described again. In FIG. 3C, for example, the terminal apparatus #5 receives reference signals from a plurality of terminal apparatuses. In an application scenario in this embodiment of this application, there may also be one terminal apparatus that sends a reference signal to the terminal apparatus #5.

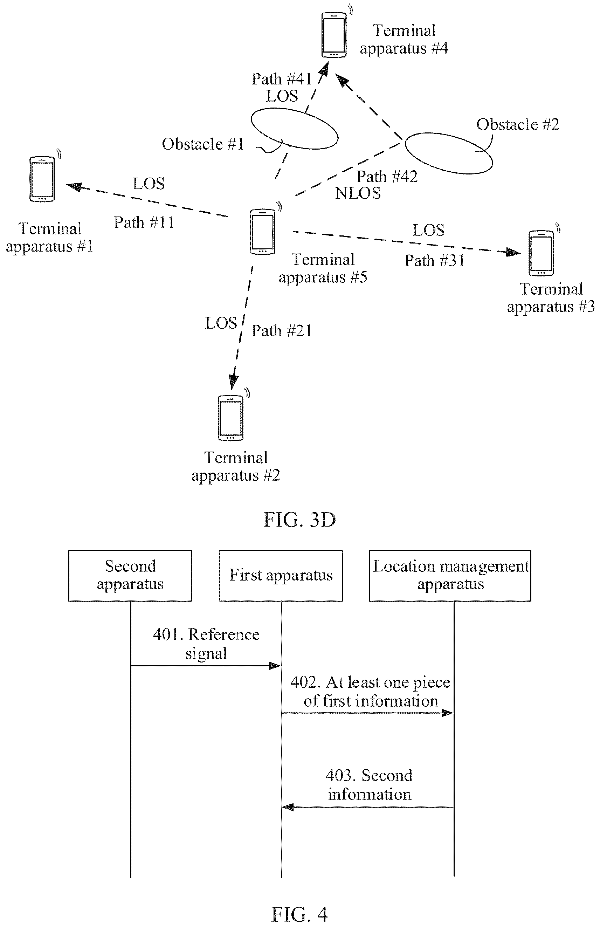

FIG. 3D shows an example of a diagram of a network architecture of another communication system according to an embodiment of this application. As shown in FIG. 3D, the communication system includes a terminal apparatus, and the terminal apparatus may be the terminal device or the chip (system) in the terminal device shown in FIG. 1, FIG. 2A, FIG. 2B, FIG. 2C, and FIG. 2D.

A difference between FIG. 3A and FIG. 3D includes the following content: In the scenario shown in FIG. 3D, a reference signal is transmitted between terminal apparatuses. In this scenario, a terminal apparatus #5 may send a reference signal, and a terminal apparatus #1, a terminal apparatus #2, a terminal apparatus #3, and a terminal apparatus #4 may measure the received reference signal from the terminal apparatus #5. One or more of the terminal apparatus #1, the terminal apparatus #2, the terminal apparatus #3, and the terminal apparatus #4 may be considered as a first apparatus, and the first apparatus (for example, the terminal apparatus #4) measures the received reference signal to obtain measurement information and path information, and reports the measurement information and the path information to a location management apparatus, and then the location management apparatus feeds back, to the first apparatus (for example, the terminal apparatus #4), information indicating accuracy of the path information, to assist the first apparatus (for example, the terminal apparatus #4) in improving path identification performance, and more accurately determining a likelihood that a path corresponding to the measurement information is an LOS path and/or an NLOS path.

Other content in FIG. 3C is similar to content in FIG. 3A. Details are not described again. In FIG. 3D, for example, the plurality of terminal apparatuses receive the reference signal from the terminal apparatus #5. In an application scenario in this embodiment of this application, the reference signal from the terminal apparatus #5 is received and measured, and there may be one terminal apparatus that reports measurement information and path information.

Based on the embodiments shown in FIG. 1, FIG. 2A, FIG. 2B, FIG. 2C, FIG. 2D, FIG. 3A, FIG. 3B, FIG. 3C, and FIG. 3D, and the foregoing other content, FIG. 4 shows an example of a schematic flowchart of a communication method according to an embodiment of this application. For ease of understanding of this application, descriptions are provided through interaction between a first apparatus, a second apparatus, and a location management apparatus in FIG. 4.

Either of the first apparatus and the second apparatus in this embodiment of this application may be the network device, the chip (system) in the network device, the terminal device, or the chip (system) in the terminal device in FIG. 1, FIG. 2A, FIG. 2B, FIG. 2C, FIG. 2D, FIG. 3A, FIG. 3B, FIG. 3C, and FIG. 3D. For example, when the first apparatus may be the terminal device or the chip (system) in the terminal device shown in FIG. 1, FIG. 2A, FIG. 2B, FIG. 2C, FIG. 2D, FIG. 3A, FIG. 3B, FIG. 3C, and FIG. 3D, the second apparatus may be the terminal device, the chip (system) in the terminal device, the network device, or the chip (system) in the network device shown in FIG. 1, FIG. 2A, FIG. 2B, FIG. 2C, FIG. 2D, FIG. 3A, FIG. 3B, FIG. 3C, and FIG. 3D. When the first apparatus may be the network device or the chip (system) in the network shown in FIG. 1, FIG. 2A, FIG. 2B, FIG. 2C, FIG. 2D, FIG. 3A, FIG. 3B, FIG. 3C, and FIG. 3D, the second apparatus may be the terminal device, the chip (system) in the terminal device, the network device, or the chip (system) in the network device shown in FIG. 1, FIG. 2A, FIG. 2B, FIG. 2C, FIG. 2D, FIG. 3A, FIG. 3B, FIG. 3C, and FIG. 3D.

The location management apparatus in this embodiment of this application may be a device having a positioning function or a chip (system) in the device having a positioning function. For example, the location management apparatus may be the location management device or a chip (system) in the location management device in FIG. 1, FIG. 2A, FIG. 2B, FIG. 2C, FIG. 2D, FIG. 3A, FIG. 3B, FIG. 3C, and FIG. 3D. For example, the location management device may include one or more of an LMF, an LMC, or an LLMF. For another example, the location management apparatus may be the network device, the chip (system) in the network device, the terminal device, or the chip (system) in the terminal device in FIG. 1, FIG. 2A, FIG. 2B, FIG. 2C, FIG. 2D, FIG. 3A, FIG. 3B, FIG. 3C, and FIG. 3D.

As shown in FIG. 4, the method includes one or more of step 401, step 402, and step 403.

Step 401: A second apparatus sends a reference signal.

A first apparatus receives the reference signal from the second apparatus.

In this embodiment of this application, the first apparatus may receive a reference signal from one second apparatus, or may receive reference signals from a plurality of second apparatuses.

The solution provided in FIG. 4 may be applied to FIG. 3A, FIG. 3B, FIG. 3C, or FIG. 3D.

For example, the first apparatus may be the terminal apparatus #5 in FIG. 3A, and the base station #1, the base station #2, the base station #3, and the base station #4 in FIG. 3A may all be referred to as second apparatuses. There may be one or more second apparatuses. The reference signal sent by the second apparatus may include, for example, a PRS.

For another example, the second apparatus may be the terminal apparatus #5 in FIG. 3B, and the first apparatus may be any one of the base station #1, the base station #2, the base station #3, or the base station #4 in FIG. 3B. There may be one or more second apparatuses (for example, the first apparatus may receive reference signals from a plurality of terminal apparatuses, and the plurality of terminal apparatuses include the terminal apparatus #5). The reference signal sent by the second apparatus may include, for example, an SRS.

For another example, the first apparatus may be the terminal apparatus #5 in FIG. 3C, and the terminal apparatus #1, the terminal apparatus #2, the terminal apparatus #3, and the terminal apparatus #4 in FIG. 3C may all be referred to as second apparatuses. There may be one or more second apparatuses. For another example, the second apparatus may be the terminal apparatus #5 in FIG. 3D, and the first apparatus may be any one of the terminal apparatus #1, the terminal apparatus #2, the terminal apparatus #3, or the terminal apparatus #4 in FIG. 3D. There may be one or more second apparatuses (for example, the first apparatus may receive reference signals from a plurality of terminal apparatuses, and the plurality of terminal apparatuses include the terminal apparatus #5).

Step 402: The first apparatus sends at least one piece of first information.

A location management apparatus may receive the at least one piece of first information from the first apparatus.

In this embodiment of this application, information that is sent by the first apparatus and that includes measurement information is referred to as first information, and the first apparatus may send one or more pieces of first information to the location management apparatus. The at least one piece of first information is used for positioning. For example, the location management apparatus may determine location information of the first apparatus or the second apparatus based on the at least one piece of first information. For example, the first apparatus is a terminal device and the second apparatus is a network device, or the first apparatus is a network device and the second apparatus is a terminal device. The location management apparatus may determine a location of the terminal device based on known location information of the network device and the at least one piece of first information. For another example, both the first apparatus and the second apparatus are terminal devices: The location management apparatus may determine a location of the first apparatus based on a known location of the second apparatus and the at least one piece of first information; or the location management apparatus may determine a location of the second apparatus based on a known location of the first apparatus and the at least one piece of first information; or the location management apparatus may determine a relative location between the first apparatus and the second apparatus based on the at least one piece of first information, for example, may determine information such as a distance between the first apparatus and the second apparatus.

In this embodiment of this application, the first apparatus may report the at least one piece of first information to the location management apparatus. The first information reported by the first apparatus may include information A1 and information A2. The information A1 is measurement information, and the information A2 is path information.

### Information A1: measurement information

The measurement information indicates a measurement result of a reference signal. The measurement information may include a value of a measurement parameter, the measurement parameter may also be referred to as a measurement parameter corresponding to the measurement information, and the measurement parameter may be associated with a positioning technology. In this embodiment of this application, the measurement parameter may include, for example, at least one of an AOA, a TOA, an AOD, or a phase.

When the first apparatus reports a plurality of pieces of first information to the location management apparatus, measurement parameters corresponding to measurement information included in any two pieces of first information in the plurality of pieces of first information may be the same. Alternatively, measurement parameters corresponding to measurement information included in any two pieces of first information in the plurality of pieces of first information may be different. For example, if measurement information included in one piece of first information in the plurality of pieces of first information is a value of an AOA, it may also be understood that a measurement parameter corresponding to the measurement information is an AOA. If measurement information included in another piece of first information in the plurality of pieces of first information includes a value of at least one of a TOA, an AOD, or a phase, it may also be understood that a measurement parameter corresponding to the measurement information includes at least one of a TOA, an AOD, or a phase.

For example, when the first apparatus is a network apparatus, the second apparatus is a first terminal apparatus, and the measurement information may indicate a measurement result obtained by the network apparatus by measuring a reference signal from the first terminal apparatus. For another example, when the first apparatus is a first terminal apparatus, the second apparatus may be a network apparatus, and the measurement information indicates a measurement result obtained by the first terminal apparatus by measuring a reference signal from the network apparatus. For another example, when the first apparatus is a first terminal apparatus, the second apparatus may be a second terminal apparatus, and the measurement information indicates a measurement result obtained by the first terminal apparatus by measuring a reference signal from the second terminal apparatus.

### Information A2: path information

In this embodiment of this application, the path information may indicate a likelihood that a path corresponding to the measurement information is an LOS path and/or an NLOS path. A specific meaning includes: The path information may indicate a likelihood that a path corresponding to the measurement information is an LOS path; or the path information may indicate a likelihood that a path corresponding to the measurement information is an NLOS path; or the path information may indicate a likelihood that a path corresponding to the measurement information is an LOS path and a likelihood that the path is an NLOS path.

In this embodiment of this application, the reference signal may be transmitted from the second apparatus to the first apparatus through a plurality of channels. One channel may include a plurality of paths, and the plurality of paths may include an LOS path and an NLOS path. The first apparatus receives the reference signal, may select a path of the reference signal for measurement, and obtain measurement information based on a measurement result. The path may also be referred to as a path corresponding to the measurement information.

In a process of measuring the reference signal, the first apparatus may select a path according to some principles. For example, the first apparatus may select a path with strong energy of the reference signal for measurement to obtain measurement information, or the first apparatus may select a path with a minimum delay for measurement to obtain measurement information. In a process of measuring the reference signal, the first apparatus selects a path according to these principles, to obtain an LOS path through measurement. However, in an actual scenario, the path measured by the first apparatus may be an LOS path or an NLOS path (for example, in the example in FIG. 3A, a path with strongest energy of the reference signal received by the terminal apparatus #5 from the base station #4 may be a path #42, and the path #42 is an NLOS path).

In this embodiment of this application, the at least one piece of first information may include measurement information and path information, and the measurement information and the path information may be considered as information having an association relationship. The path information may indicate a likelihood (the likelihood may also be replaced with a probability, a possibility, or the like) that a path corresponding to the measurement information associated with the path information is an LOS path. The path information may also indicate a likelihood (the likelihood may also be replaced with a probability, a possibility, or the like) that a path corresponding to the measurement information associated with the path information is an NLOS path. The path information may also indicate a likelihood (the likelihood may also be replaced with a probability, a possibility, or the like) that a path corresponding to the measurement information associated with the path information is an NLOS path, and a likelihood (the likelihood may also be replaced with a probability, a possibility, or the like) that the path is an LOS path. In this embodiment of this application, the measurement information and the path information that have an association relationship may be separately sent by using two messages, or may be transmitted by using one message.

In a possible implementation, the path information includes information indicating a likelihood that a path corresponding to the measurement information is an LOS path and/or an NLOS path, and the information may include a probability (probability) value and/or a likelihood (likelihood) value. For example, if a likelihood that a path corresponding to measurement information is an LOS path is high, the information may be a value biased toward 1, for example, 0.9. For another example, if a likelihood that a path corresponding to measurement information is an NLOS path is high, the information may be a value biased toward 0, for example, 0.2.

A first apparatus side may determine, by using some solutions, the path information associated with the measurement information. These solutions include, for example, one or more of energy consistency detection, channel characteristic analysis, or machine learning. Descriptions are separately provided below by using Example 1, Example 2, and Example 3.

Example 1: For an example of an energy consistency detection solution, for example, the first apparatus includes a plurality of antennas, and the first apparatus receives the reference signal from the second apparatus through the plurality of antennas. For a path of the reference signal, if energy of signals corresponding to the path that are received through the plurality of antennas tends to be consistent, it may be determined that a likelihood the path is an LOS path is higher; or if energy of signals corresponding to the path that are received through the plurality of antennas differ greatly, it may be determined that a likelihood that the path is an NLOS path is higher.

Example 2: For a channel characteristic analysis solution, the first apparatus receives the reference signal from the second apparatus, and measures the reference signal. For a path of the reference signal, the first apparatus may obtain, through measurement, some channel parameters (for example, a factor k and/or a delay spread channel parameter, where the factor k may be understood as a ratio of energy of an LOS path/first path to energy of an NLOS path) of the path, and then put these channel parameters into a preset calculation model or detection model. A result may be input into the calculation model or the detection model, and the result may indicate a likelihood that the path is an NLOS path and/or an LOS path.

Example 3: For an example of a machine learning solution, the first apparatus may obtain a model, and the model is obtained by training some channel data. The first apparatus receives the reference signal from the second apparatus, and measures the reference signal. For a path of the reference signal, the first apparatus may measure some channel data of the path, and then put the channel data into the model. A result may be input into the model, and the result may indicate a likelihood that the path is an NLOS path and/or an LOS path.

Step 403: The location management apparatus sends second information.

Correspondingly, the first apparatus receives the second information.

The second information may indicate accuracy of path information in one or more pieces of first information in the at least one piece of first information.

It can be learned from the foregoing content that, when reporting the measurement information, the first apparatus may further report path information corresponding to the measurement information, where the path information may indicate a likelihood that a path corresponding to the measurement information is an LOS/NLOS path. The path information may assist the location management apparatus in positioning, and the path information may improve positioning accuracy of the location management apparatus. For example, the location management apparatus may receive information indicating the likelihood that the path corresponding to the measurement information is an LOS/NLOS path, and then assign a weight to the measurement information (or may not use the measurement information obtained based on an NLOS path), thereby improving positioning accuracy.

In an actual application, the path information reported by the first apparatus may also be inaccurate, resulting in low positioning accuracy. However, if a working system corresponding to the path information reported by the first apparatus is an open-loop system, that is, after the first apparatus reports the at least one piece of first information, the first apparatus cannot receive, from the location management apparatus, the second information indicating accuracy of the path information. Therefore, the first apparatus cannot sense accuracy of the path information identified by the first apparatus, and cannot adjust or improve a path identification algorithm of the first apparatus. In addition, when the location management apparatus performs positioning based on the path information with a deviation, it is difficult to ensure positioning accuracy.

Based on this, in the solution provided in this embodiment of this application, the location management apparatus may send the second information to the first apparatus, and the second information may indicate accuracy of the path information, so that the second information can assist the first apparatus in identifying a channel environment, improving a path identification solution based on a current channel environment, and improving path identification performance. The first apparatus may more accurately determine the likelihood that the path corresponding to the measurement information is an LOS path and/or an NLOS path, thereby improving positioning performance.

In this embodiment of this application, there may be one or more apparatuses that report measurement information to the location management apparatus. For an apparatus that reports measurement information and path information, the location management apparatus may feed back, to the apparatus, information indicating accuracy of the path information. For example, in the foregoing solution in FIG. 3B, the location management apparatus may receive and obtain measurement information reported by the base station #1, the base station #2, the base station #3, and the base station #4, and the location management apparatus may check path information from each base station, and feed back information indicating accuracy of the path information of the base station to the base station, to assist the base station in improving or adjusting a path identification algorithm, thereby improving accuracy of subsequent path identification and improving positioning accuracy. For a related solution, refer to related content in which the location management apparatus feeds back the second information to the first apparatus in FIG. 4. Details are not described again.

In this embodiment of this application, the first information may be obtained by the first apparatus based on the reference signal. The following respectively describes, by using a parameter B1, a parameter B2, a parameter B3, a parameter B4, and a parameter B5, a sending apparatus of a reference signal on which the first information is based, identification information of a reference signal on which the first information is based, time corresponding to the first information, a time range corresponding to the first information, and a measurement parameter corresponding to the first information.

### Parameter B1: sending apparatus of the reference signal on which the first information is based

In this embodiment of this application, the sending apparatus of the reference signal is referred to as the second apparatus. The sending apparatus of the reference signal on which the first information is based (or referred to as the second apparatus) may also be understood as that the sending apparatus sends the reference signal, and the first apparatus measures the reference signal to obtain a measurement result in the first information (or understood as that the first apparatus obtains the first information based on the reference signal).

In this embodiment of this application, the first apparatus may receive a plurality of reference signals from one second apparatus, to obtain at least one piece of first information. Alternatively, the first apparatus may receive a plurality of reference signals from a plurality of second apparatuses, to obtain at least one piece of first information. It may also be understood that a plurality of second apparatuses corresponding to a plurality of pieces of first information in this embodiment of this application may be the same or different.

The first apparatus may measure a reference signal from the second apparatus, to obtain one piece of first information. Alternatively, the first apparatus may measure a plurality of reference signals from the second apparatus, to obtain a plurality of pieces of first information.

### Parameter B2: identification information of the reference signal on which the first information is based

In this embodiment of this application, the reference signal may include identification information, and the identification information identifies the reference signal. In this embodiment of this application, the identification information of the reference signal may include, for example, identification information of a resource of the reference signal and/or resource set identification information of the reference signal. For example, the reference signal includes a PRS, and the identification information of the reference signal may include a resource identifier (identifier, ID) of the PRS and/or a resource set ID of the PRS. For another example, the reference signal includes an SRS, and the identification information of the reference signal may include a resource identifier (identifier, ID) of the SRS and/or a resource set ID of the SRS.

The first apparatus may receive reference signals from one or more second apparatuses, and the first apparatus may further obtain identification information of the reference signals, for example, identification information of the reference signal received by the first apparatus from the second apparatus, or query identification information of the reference signals from configuration information, or determine identification information of the reference signals from preset information.

In this embodiment of this application, the identification information of the plurality of reference signals received by the first apparatus may be different. For example, identification information of at least two reference signals may be different. Some or all of the identification information of the plurality of reference signals may also be the same.

### Parameter B3: time corresponding to the first information

In this embodiment of this application, the time corresponding to the first information may include one of time at which the first apparatus measures the reference signal to obtain the measurement information, time at which the first apparatus measures the reference signal, time at which the reference signal is sent, time at which the reference signal is received, time at which the first apparatus sends the first information, or the like.

The time information in this embodiment of this application may include information that can indicate time, for example, may include information about hour, minute, and second, or may include information about a system frame number, or may include information about a slot.

In this embodiment of this application, time corresponding to two pieces of first information in the at least one piece of first information may be the same or different.

### Parameter B4: time range corresponding to the first information

In this embodiment of this application, the time range corresponding to the first information may be a time range set by the first apparatus for the first information, or may be a time range set by the location management apparatus for the first information. A time range set by the location management apparatus or the first apparatus may include time corresponding to the first information, or it may be understood that the time range is determined based on the time corresponding to the first information.

For example, the time range corresponding to the first information may include time at which the first apparatus measures the reference signal to obtain the measurement information in the first information. For example, time at which the first apparatus obtains three pieces of measurement information is respectively a first slot in a system frame 1, a fifth slot in a system frame 2, and an eighth slot in a system frame 3, and the time range includes a time range determined based on time of a plurality of pieces of measurement information. For example, the time range is a first slot in a system frame 1 to an eighth slot in a system frame 3.

For example, time at which the first apparatus obtains three pieces of measurement information is respectively a first slot, a fifth slot, and an eighth slot, and the time range includes a time range determined based on time of a plurality of pieces of measurement information. For example, the time range is a first slot to an eighth slot.

For another example, time at which the first apparatus obtains three pieces of measurement information is respectively 8:05:20, 8:05:22, and 8:05:25, and the time range includes a time range determined based on time of a plurality of pieces of measurement information. For example, the time range is 8:05:20 to 8:05:25.

For another example, the time range corresponding to the first information may include time at which the first apparatus measures a plurality of reference signals from the second apparatus, and the time range may be determined based on the time (one or more times) at which the first apparatus measures the plurality of reference signals from the second apparatus. For another example, the time range corresponding to the first information may include time at which the first apparatus sends the first information, and the time range may be determined based on the time (one or more times) at which the first apparatus sends the first information. For another example, the time range corresponding to the first information may include reference signal sending time corresponding to the first information, and the time range may be determined based on the reference signal sending time (one or more times) corresponding to the first information. For another example, the time range corresponding to the first information may include a reference signal receiving time corresponding to the first information, and the time range may be determined based on the reference signal receiving time (one or more times) corresponding to the first information. For related examples, refer to the foregoing descriptions. Details are not described again.

The foregoing specific manner of determining the time range is some examples. In an actual application, the time range may be flexibly determined based on time involved in the at least one piece of first information.

### Parameter B5: measurement parameter corresponding to the first information

In this embodiment of this application, the measurement information in the first information indicates a measurement result obtained by the first apparatus by measuring the reference signal, and the measurement result may include a value of a measurement parameter. The measurement parameter may be set flexibly. For related content, refer to the foregoing descriptions. Details are not described again.

In a possible implementation, the second information may include indication information, and the indication information indicates that the second information has an association relationship with one or more pieces of first information in the at least one piece of first information.

In a possible implementation, a plurality of pieces of first information associated with the second information may also be referred to as a group of first information, or may be referred to as a plurality of pieces of first information corresponding to a group of measurement results. It may also be understood that one piece of second information may indicate accuracy of path information in some or all of the at least one piece of first information. The location management apparatus may also feed back a plurality of pieces of second information to the first apparatus. Each of the plurality of pieces of second information may be associated with some or all of the at least one piece of first information. Two pieces of first information associated with two pieces of second information may or may not have an intersection. In this embodiment of this application, one piece of second information is used as an example for description. When there are a plurality of pieces of second information, for related implementations of other second information, refer to related content of the second information in this embodiment of this application. Details are not described again.

After the first apparatus reports the at least one piece of first information, the location management apparatus further needs specific time to generate the second information. Before the location management apparatus feeds back the second information to the first apparatus, after sending the at least one piece of first information, the first apparatus may further send other measurement information and path information. Therefore, the location management apparatus may indicate, to the first apparatus by using the indication information, first information (for example, first information within a time range, or first information corresponding to a second apparatus (for example, a base station)) with which the second information is associated, so that the first apparatus can determine that the second information indicates accuracy of path information in specific first information, to more properly determine, through analysis, whether a path identification solution needs to be improved and how to improve the path identification solution.

In a possible implementation, the indication information includes at least one of the following content of the one or more pieces of first information (or understood as first information associated with the second information): identification information of a sending apparatus of a reference signal on which the first information is based; identification information of a reference signal on which the first information is based; time information corresponding to the first information; time range information corresponding to the first information; or measurement parameter information corresponding to the first information.

For example, the indication information may include identification information of one or more second apparatuses. It may also be understood that the indication information includes identification information of the second apparatus corresponding to the first information that has an association relationship with the second information. The identification information of the second apparatus is information that can identify the second apparatus. For example, when the second apparatus is a base station, the identification information of the second apparatus may be a transmission reception point (transmission reception point, TRP) ID, a PRS ID, and a physical cell identifier (physical cell identifier, PCI). The PRS ID is different from a resource ID of the foregoing related PRS, and the PRS ID is also different from a resource set ID of the foregoing related PRS. The resource ID and/or the resource set ID of the PRS may be considered as the identification information of the reference signal, and the PRS ID may be considered as the identification information of the second apparatus. For another example, when the second apparatus is a terminal apparatus, an identifier of the second apparatus may be a radio network temporary identifier (radio network temporary identifier, RNTI). In this implementation, the location management apparatus may evaluate path information in first information corresponding to one or more specified second apparatuses, so that the first apparatus can determine, based on the second information, that the second information indicates accuracy of path information corresponding to a reference signal transmitted between the first apparatus and a specific second apparatus, and then determine, through analysis based on the second information, whether a path identification solution of the reference signal transmitted between the first apparatus and the second apparatus needs to be improved, how to improve the path identification solution, and the like.

For another example, the indication information may include identification information of one or more reference signals. It may also be understood that the indication information includes identification information of the reference signal corresponding to the first information that has an association relationship with the second information. In this implementation, the location management apparatus may evaluate path information corresponding to one or more specified reference signals, so that the first apparatus can determine, based on the second information, that the second information indicates accuracy of path information corresponding to a specific reference signal transmitted between the first apparatus and the second apparatus, and then determine, through analysis based on the second information, whether a path identification solution of the reference signal transmitted between the first apparatus and the second apparatus needs to be improved, how to improve the path identification solution, and the like.

For another example, the indication information may include one or more pieces of time information, and the time information included in the indication information may indicate time corresponding to the one or more pieces of first information. It may also be understood that the indication information includes time information corresponding to the first information that has an association relationship with the second information. In this implementation, the location management apparatus may evaluate path information in first information corresponding to same time or several specified time, so that the first apparatus can determine, based on the second information, that the second information indicates accuracy of path information in the first information corresponding to specific time, and then determine, through analysis based on the second information, whether a path identification solution of the first apparatus needs to be improved, how to improve the path identification solution, and the like.

For another example, the indication information may include one or more pieces of time range information. It may also be understood that the indication information includes time range information corresponding to the first information that has an association relationship with the second information. In this implementation, the location management apparatus may evaluate path information in first information corresponding to a same time range or several specified time ranges, so that the first apparatus can determine, based on the second information, that the second information indicates accuracy of path information in a plurality of pieces of first information (or one piece of first information) within a specific time range, and then determine, through analysis based on the second information, whether a path identification solution of the first apparatus needs to be improved, how to improve the path identification solution, and the like.

For another example, the indication information may include one or more pieces of measurement parameter information. It may also be understood that the indication information includes measurement parameter information corresponding to the first information that has an association relationship with the second information. In this implementation, the location management apparatus may evaluate path information in first information corresponding to one or more measurement parameters, to obtain accuracy of path information in a dimension of the measurement parameter, so that the first apparatus can determine, from the dimension of the measurement parameter, whether a path identification solution of the first apparatus needs to be improved.

In another possible implementation, the indication information indicates that when the second information has an association relationship with a plurality of pieces of first information, the plurality of pieces of first information meet one or more of Content 1, Content 2, Content 3, and Content 4.

Content 1: Sending apparatuses of reference signals on which the plurality of pieces of first information are based are the same, or sending apparatuses of reference signals on which two pieces of first information in the plurality of pieces of first information are based are different.

Content 2: Time corresponding to the plurality of pieces of first information are the same, or time corresponding to two pieces of first information in the plurality of pieces of first information are different.

Content 3: Time ranges corresponding to the plurality of pieces of first information are the same, or time ranges corresponding to two pieces of first information in the plurality of pieces of first information are different.

Content 4: Measurement parameters corresponding to the plurality of pieces of first information are the same, or measurement parameters corresponding to two pieces of first information in the plurality of pieces of first information are different.

The location management apparatus may comprehensively consider a plurality of pieces of first information that meet a specific rule (for example, a plurality of pieces of first information at same time, a plurality of pieces of first information including different measurement parameters, a plurality of pieces of first information at different time, or first information corresponding to different second apparatuses), to determine accuracy of the path information more accurately. In addition, the location management apparatus feeds back one piece of second information to the first apparatus, to indicate accuracy of a plurality of pieces of path information in the plurality of pieces of first information, so that a quantity of bits occupied by the information fed back by the location management apparatus can be reduced, thereby saving resources.

In a possible implementation, the first information in the at least one piece of first information includes one or more of the following content: time information corresponding to the first information; time range information corresponding to the first information; identification information of a sending apparatus of a reference signal on which the first information is based; or measurement parameter information corresponding to the first information. Because the first information includes the information, the location management apparatus may directly obtain the information from the first information, and add the information to the second information, so that the first apparatus determines an association relationship between the second information and the first information and/or the second apparatus.

The following uses Table 1 and Table 2 as examples. Table 1 shows an example of the first information sent by the first apparatus. The example first information in Table 1 includes time information. The time information may also be referred to as a time label.

Content in the first row in Table 1 is used as an example. The content in the row indicates that the first information includes measurement information #1, and the first information further includes time information #1, that is, time corresponding to the measurement information #1 is time indicated by the time information #1. Content in the first row in Table 2 is used as an example. The second information in the content in the row includes time information #1, the second information further includes information indicating accuracy of the path information, and information indicating accuracy of the path information in the row is "correct". The first apparatus may determine, based on the second information in the content in the first row in Table 2, that the path information associated with measurement information #1 corresponding to the time information #1 is correct. Content of other rows in Table 1 and Table 2 is similar to that in the first row. Details are not described again.

**Table 1 Example of first information**

| Measurement information included in the first information | Other content included in the first information |
|---|---|
| Measurement information #1 | Time information #1 |
| Measurement information #2 | Time information #2 |
| Measurement information #3 | Time information #3 |

**Table 2 Example of second information**

| Indication information included in the second information | Information that is included in the second information and that indicates accuracy of path information |
|---|---|
| Time information #1 | Correct |
| Time information #2 | Incorrect |
| Time information #3 | Incorrect |

The following uses Table 3 and Table 4 as other examples. Table 3 shows an example of the first information sent by the first apparatus. The example first information in Table 3 includes time information and an identifier of a base station. The time information may also be referred to as a time label, and the identifier of the base station may be understood as identification information of a sending apparatus of a reference signal on which the first information is based.

Content in the first row in Table 3 is used as an example. The content in the row indicates that the first information includes measurement information #1, and the first information further includes time information #1 and an identifier of a base station #1, that is, time corresponding to the measurement information #1 is time indicated by the time information #1, and the sending apparatus of the reference signal on which the measurement information is based is the base station #1. Content in the first row in Table 4 is used as an example. The second information in the content in the row includes time information #1 and an identifier of a base station #1, the second information further includes information indicating accuracy of the path information, and information indicating accuracy of the path information in the row is "correct". The first apparatus may determine, based on the second information in the content in the first row in Table 4, that the path information associated with measurement information #1 corresponding to the time information #1 and the identifier of the base station #1 is correct. Content of other rows in Table 3 and Table 4 is similar to that in the first row. Details are not described again.

**Table 3 Example of first information**

| Measurement information included in the first information | Other content included in the first information |
|---|---|
| Measurement information #1 | Time information #1 and identifier of a base station #1 |
| Measurement information #2 | Time information #2 and identifier of a base station #2 |
| Measurement information #3 | Time information #3 and identifier of the base station #1 |

**Table 4 Example of second information**

| Indication information included in the second information | Information that is included in the second information and that indicates accuracy of path information |
|---|---|
| Time information #1 and identifier of a base station #1 | Correct |
| Time information #2 and identifier of a base station #2 | Incorrect |
| Time information #3 and identifier of the base station #1 | Incorrect |

The indication information in this embodiment of this application may also include one or more of time information, time range information, or identification information of the second apparatus. Related content is similar to the foregoing content. Details are not described again.

In this embodiment of this application, the second information may include information indicating accuracy of path information. The information indicating accuracy of the path information indicates accuracy of path information in one or more pieces of first information (or referred to as one or more pieces of first information associated with the second information) in the at least one piece of first information. The information indicating accuracy of the path information may be implemented in a plurality of manners. Descriptions are provided below by using examples in Implementation C1, Implementation C2, Implementation C3, Implementation C4, Implementation C5, Implementation C6, Implementation C7, Implementation C8, Implementation C9, Implementation C10, Implementation C11, Implementation C12, Implementation C13, Implementation C14, and Implementation C15.

Implementation C1: The information indicating accuracy of the path information includes information indicating correct path information, or information indicating incorrect path information.

In Implementation C1, in a possible example, the information indicating accuracy of the path information may include information carried in one or more bits.

For example, if a bit carries 0, it may be understood that information on the bit indicates that the path information is correct. For another example, if the bit carries 1, it may be understood that information on the bit indicates that the path information is incorrect.

Table 5 shows a possible example of a correspondence between first information and second information below. In the example shown in Table 5, the location management apparatus feeds back a plurality of pieces of second information to the first apparatus, where each piece of second information may include information indicating correct path information or information indicating incorrect path information.

Content in the first row in Table 5 is used as an example. The content in the row indicates that the first information includes measurement information #1 and path information #1, and the second information associated with the first information includes "correct". The first apparatus may determine that path information #1 is correct. Content of other rows in Table 5 is similar to that in the first row. Details are not described again.

**Table 5 Example of a correspondence between first information and second information**

| Information included in the first information | Information included in the second information |
|---|---|
| Measurement information #1 and path information #1 | Correct |
| Measurement information #2 and path information #2 | Incorrect |
| Measurement information #3 and path information #3 | Incorrect |

In this embodiment of this application, "correct" may also be replaced with another word, for example, "succeeded", "verification succeeds", "good quality", or "relatively good quality". In this embodiment of this application, "incorrect" may also be replaced with another word, for example, "wrong", "failed", "verification fails", "poor quality", or "relatively poor quality".

After receiving the information indicating correct or incorrect path information, the first apparatus may determine whether path information in one or more pieces of first information (or referred to as first information associated with the second information) is correct or incorrect. In this solution, because the location management apparatus needs to determine correct or incorrect path information, complexity of an algorithm required in this solution is low. Therefore, in a scenario in which there are a large quantity of users in a network, computing load of the network can be reduced.

Implementation C2: The information indicating accuracy of the path information includes information indicating a correctness probability of the path information.

The information indicating the correctness probability of the path information may include a probability value or a likelihood value. For example, the information indicating the correctness probability of the path information may be a value between 0 and 1, and may be in a form of a percentage, for example, 90%, indicating that the correctness probability of the path information is 90%.

The information indicating the correctness probability of the path information may also be an index value. For example, the location management apparatus and the first apparatus include a preset table (or a preset association relationship), the preset table (or the preset association relationship) includes an association relationship between a probability value (or a likelihood value) and an index value, and the index value carried in the second information may indicate a probability value corresponding to the index value.

After receiving the information that is in the second information and that indicates the correctness probability of the path information, the first apparatus may determine a correctness probability of path information in one or more pieces of first information (or referred to as first information associated with the second information). In this way, the first apparatus can more accurately determine a correctness degree of the path information, thereby better assisting the first apparatus in improving a path identification solution.

When the second information is associated with a plurality of pieces of first information, a probability indicated by the information that is carried in the second information and that indicates the correctness probability of the path information may include a correctness probability of one or more pieces of path information in the plurality of pieces of first information, or an average value of correctness probabilities of a plurality of pieces of path information in the plurality of pieces of first information.

Implementation C3: The information indicating accuracy of the path information includes information indicating an incorrectness probability of the path information.

The information indicating the incorrectness probability of the path information may include a probability value or a likelihood value. For example, the information indicating the incorrectness probability of the path information may be a value between 0 and 1, and may be in a form of a percentage, for example, 10%, indicating that the incorrectness probability of the path information is 10%.

Implementation C3 is similar to Implementation C2, and a difference lies in that the information indicating accuracy of the path information includes the information indicating the incorrectness probability of the path information. For a related implementation, refer to content in Implementation C2. Details are not described again.

Implementation C4: The information indicating accuracy of the path information includes information indicating an error of the path information.

The location management apparatus may determine the error of the path information, and then indicate the error of the path information to the first apparatus. The error may also be referred to as a check error.

For example, the path information sent by the first apparatus indicates that a likelihood that a path corresponding to the first information is an LOS path is 90%. After the location management apparatus performs check, the likelihood that the path corresponding to the first information is an LOS path is 75%. In this case, the location management apparatus may feed back an error (15%) of the path information to the first apparatus.

After receiving the information that is in the second information and that indicates the error of the path information, the first apparatus may determine accuracy of path information in one or more pieces of first information (or referred to as first information associated with the second information). A larger error indicated by the second information indicates lower accuracy of the path information, and a smaller error indicated by the second information indicates higher accuracy of the path information. In this way, the first apparatus can more accurately determine the error of the path information, thereby better assisting the first apparatus in improving a path identification solution.

When the second information is associated with a plurality of pieces of first information, an error indicated by the information that is carried in the second information and that indicates the error of the path information may include an error of one or more pieces of path information in the plurality of pieces of first information, or an average value of errors of a plurality of pieces of path information in the plurality of pieces of first information.

Implementation C5: The information indicating accuracy of the path information includes information indicating a proportion of correct path information in a plurality of pieces of path information in the plurality of pieces of first information.

For example, the first apparatus reports the plurality of pieces of first information, and the location management apparatus collects statistics on a quantity of correct path information in the plurality of pieces of first information, to obtain a proportion of correct path information.

The information indicating the proportion of the correct path information in the plurality of pieces of path information in the plurality of pieces of first information may be a proportion value, and the proportion value is a proportion of correct path information in the plurality of pieces of path information in the plurality of pieces of first information.

Table 6 shows a possible example of a correspondence between first information and second information below. In the example shown in Table 6, the location management apparatus feeds back the second information to the first apparatus, where the second information is associated with three pieces of first information. The first apparatus may determine that a proportion of correct path information in path information #1, path information #2, and path information #3 is 33.3%. A proportion of correct path information may also be referred to as a correctness rate.

**Table 6 Example of a correspondence between first information and second information**

| Information included in the first information | Information included in the second information |
|---|---|
| Measurement information #1 and path information #1 | Proportion 33.3% of correct path information |
| Measurement information #2 and path information #2 | |
| Measurement information #3 and path information #3 | |

Implementation C6: The information indicating accuracy of the path information includes information indicating a proportion of incorrect path information in a plurality of pieces of path information in the plurality of pieces of first information.

For example, the first apparatus reports the plurality of pieces of first information, and the location management apparatus collects statistics on a quantity of incorrect path information in the plurality of pieces of first information, to obtain a proportion of incorrect path information.

Implementation C6 is similar to Implementation C5, and a difference lies in that the information indicating accuracy of the path information includes the information indicating the proportion of the incorrect path information in the plurality of pieces of path information in the plurality of pieces of first information. For a related implementation, refer to content in Implementation C5. Details are not described again.

Implementation C7: The information indicating accuracy of the path information includes information indicating a proportion of path information whose correctness probabilities are greater than a first probability threshold in a plurality of pieces of path information in the plurality of pieces of first information.

For example, the first apparatus reports the plurality of pieces of first information, and the location management apparatus collects statistics on path information whose correctness probabilities are greater than the first probability threshold in the plurality of pieces of first information, to obtain a proportion of the path information whose correctness probabilities are greater than the first probability threshold.

Implementation C7 is similar to Implementation C5, and a difference lies in that information indicating accuracy of the path information includes the information indicating the proportion of the path information whose correctness probabilities are greater than the first probability threshold in the plurality of pieces of path information in the plurality of pieces of first information. For a related implementation, refer to content in Implementation C5. Details are not described again.

Implementation C8: The information indicating accuracy of the path information includes information indicating a proportion of path information whose errors are less than a first error threshold in a plurality of pieces of path information in the plurality of pieces of first information.

For example, the first apparatus reports the plurality of pieces of first information, and the location management apparatus collects statistics on path information whose errors are less than the first error threshold in the plurality of pieces of first information, to obtain a proportion of the path information whose errors are less than the first error threshold.

Implementation C8 is similar to Implementation C5, and a difference lies in that information indicating accuracy of the path information includes the information indicating the proportion of the path information whose correctness probabilities are greater than the first probability threshold in the plurality of pieces of path information in the plurality of pieces of first information. For a related implementation, refer to content in Implementation C5. Details are not described again.

Implementation C9: The information indicating accuracy of the path information includes information indicating that a location obtained based on the first information in the at least one piece of first information succeeds, or information indicating that a location obtained based on the first information in the at least one piece of first information succeeds.

In this embodiment of this application, the location management apparatus may obtain, based on the first information, a location of an apparatus (which may be the first apparatus or the second apparatus) that needs to be positioned. The location management apparatus may check the location. If the check succeeds, it may be understood that the location is accurate. If the check fails, it may be understood that the location is inaccurate.

In this embodiment of this application, that the location management apparatus obtains, based on the first information, the location of the apparatus that needs to be positioned means that the location management apparatus determines, based on at least the first information, the location of the apparatus that needs to be positioned (may determine one or more locations of the apparatus). The at least one piece of first information may be one piece of first information, or may include one piece of first information and other measurement information. For example, the location management apparatus determines a location #1 of the apparatus based on first information #1, and the location management apparatus determines a location #2 of the apparatus based on the first information #1 and measurement information #2. Both the location #1 and the location #2 may be referred to as the location that is of the apparatus needing to be positioned and that is obtained based on the first information.

The location management apparatus may check the location in a plurality of methods. For example, the location management apparatus obtains a specified location of the apparatus that needs to be positioned (for a method for obtaining the specified location, refer to the foregoing content. Details are not described again), and compares the specified location with the location obtained based on the first information. If a distance is small (for example, the distance is less than a preset distance threshold), it may be understood that the check succeeds. If a distance is large (for example, the distance is not less than a preset distance threshold), it may be understood that the check fails.

In a possible example, the information indicating accuracy of the path information may include information carried in one or more bits. For example, if a bit carries 0, it may be understood that information on the bit indicates that check on a location obtained based on the first information succeeds. For another example, if the bit carries 1, it may be understood that information on the bit indicates that check on a location obtained based on the first information fails.

After receiving the information indicating that the check on the location information succeeds or fails, the first apparatus may determine whether path information in one or more pieces of first information (or referred to as first information associated with the second information) is correct or incorrect. For example, if the path information in the first information indicates that the likelihood that the path corresponding to the first information is an LOS path is high, and the check on the location obtained based on the first information succeeds, the path information is accurate. For another example, if the path information in the first information indicates that the likelihood that the path corresponding to the first information is an LOS path is high, and the check on the location obtained based on the first information fails, the path information is inaccurate (or referred to as being incorrect). For another example, if the path information in the first information indicates that the likelihood that the path corresponding to the first information is an NLOS path is high, and the check on the location obtained based on the first information succeeds, the path information is inaccurate (or referred to as being incorrect). For another example, if the path information in the first information indicates that the likelihood that the path corresponding to the first information is an NLOS path is high, and the check on the location obtained based on the first information fails, the path information is accurate. In this solution, the location management apparatus needs to determine whether the check on the location succeeds. The algorithm is simple, and network load can be reduced.

Implementation C10: The information indicating accuracy of the path information includes information indicating a probability that check on a location obtained based on the first information in the at least one piece of first information succeeds.

The information indicating the probability that the check on the location obtained based on the first information in the at least one piece of first information succeeds may include a probability value or a likelihood value. For example, the information indicating the probability that the check on the location obtained based on the first information in the at least one piece of first information succeeds may be a value between 0 and 1, and may be in a form of a percentage, for example, 90%, indicating that the probability that the check on the location succeeds is 90%.

After receiving the information indicating the probability that the check on the location information succeeds, the first apparatus may determine accuracy of path information in the first information associated with the second information. For example, if the path information in the first information indicates that the likelihood that the path corresponding to the first information is an LOS path is high, and the probability that the check on the location obtained based on the first information succeeds is high, the path information is accurate. For related content, refer to content in Implementation C2. Details are not described again.

Implementation C11: The information indicating accuracy of the path information includes information indicating a probability that check on a location obtained based on the first information in the at least one piece of first information fails.

The information indicating the probability that the check on the location obtained based on the first information in the at least one piece of first information fails may include a probability value or a likelihood value. For example, the information indicating the probability that the check on the location obtained based on the first information in the at least one piece of first information fails may be a value between 0 and 1, and may be in a form of a percentage, for example, 10%, indicating that the probability that the check on the location fails is 10%.

After receiving the information indicating the probability that the check on the location information fails, the first apparatus may determine accuracy of path information in the first information associated with the second information. For another example, if the path information in the first information indicates that the likelihood that the path corresponding to the first information is an LOS path is high, and the probability that the check on the location obtained based on the first information fails is high, the path information is inaccurate (or referred to as being incorrect). Implementation C11 is similar to Implementation C10. Details are not described again.

Implementation C12: The information indicating accuracy of the path information includes information indicating an error of a location obtained based on the first information.

For example, the location management apparatus may obtain, based on the first information, a location of an apparatus (which may be the first apparatus or the second apparatus) that needs to be positioned. In addition, the location management apparatus may obtain a specified location of the apparatus that needs to be positioned. The specified location may be a location determined by the location management apparatus based on other measurement information, or the specified location may be a location estimated by the location management apparatus, for example, obtained by the location management apparatus through estimation based on a historical location, or the specified location may be obtained by the location management apparatus in another manner (for example, the specified location is preset). The location management apparatus compares the specified location with the location obtained based on the first information. A distance between the two locations may be understood as the error of the location obtained based on the first information.

In a possible implementation, the information indicating the error of the location obtained based on the first information may include a deviation value. In other words, the deviation value indicates the error of the location obtained based on the first information. For example, a larger deviation value indicates a larger error of the location obtained based on the first information. For another example, a smaller deviation value indicates a smaller error of the location obtained based on the first information.

For example, path information corresponding to the measurement information #1 indicates a high likelihood that a path corresponding to the measurement information #1 is an LOS path, for example, 95%. The location management apparatus determines, based on the measurement information #1, a location #1 of the apparatus (which may be the first apparatus or the second apparatus) that needs to be positioned. The deviation value may indicate a distance between the location #1 and the specified location of the apparatus that needs to be positioned. For example, if the distance is 1 meter, it indicates that the location #1 is accurate. Therefore, accuracy of the path information corresponding to the measurement information #1 may be high. In this case, a small deviation value may be set, for example, may be set to 0.1. Alternatively, if the distance is large, for example, the distance is 10 meters, the location #1 is inaccurate. Therefore, accuracy of the path information corresponding to the measurement information #1 is low. In this case, a large deviation value may be set, for example, may be set to 1.

In a case in which the path information corresponding to the measurement information indicates a high likelihood that the path corresponding to the measurement information is an LOS path, when the first apparatus receives a deviation value, if the deviation value indicates a large value, it may be understood that an error of positioning performed based on the first information associated with the second information is large, and then it may be determined that accuracy of the path information in the first information is low, so that a path identification solution can be improved. If the deviation value indicates a small value, it may be understood that an error of positioning performed based on the first information associated with the second information is small, and then it may be determined that accuracy of the path information in the first information is high.

In another possible implementation, the information indicating the error of the location obtained based on the first information may include a quality value. In other words, the quality value indicates the error of the location obtained based on the first information, or the quality value and the deviation value may indicate the error of the location obtained based on the first information. The quality value may further indicate quality of the measurement information. For example, better quality of the measurement information indicates a smaller error between the location obtained based on the measurement information and the specified location of the apparatus that needs to be positioned. For another example, poorer quality of the measurement information indicates a larger error between the location obtained based on the measurement information and the specified location.

In a case in which the path information corresponding to the measurement information indicates a high likelihood that the path corresponding to the measurement information is an LOS path, when the first apparatus receives a quality value, if the quality value indicates a small value, it may be understood that an error of positioning performed based on the first information associated with the second information is large, and then it may be determined that accuracy of the path information in the first information is low, so that a path identification solution can be improved. If the quality value indicates a large value, it may be understood that an error of positioning performed based on the first information associated with the second information is small, and then it may be determined that accuracy of the path information in the first information is high.

In this embodiment of this application, the information indicating the error between the location obtained based on the first information and the specified location may indicate an error between a location corresponding to one piece of first information and the specified location, or an average value of a plurality of errors between locations corresponding to a plurality of pieces of first information and the specified location.

Implementation C13: The information indicating accuracy of the path information includes information indicating a proportion of locations on which check succeeds in a plurality of locations obtained based on the at least one piece of first information.

For example, the first apparatus reports a plurality of pieces of first information, the location management apparatus performs positioning based on the plurality of pieces of first information, to obtain a plurality of locations, and the location management apparatus collects statistics on a quantity of locations on which check succeeds in the plurality of locations, to obtain a proportion of the locations on which the check succeeds in the plurality of locations.

After receiving the information indicating the proportion of the locations on which the check succeeds in the plurality of locations, the first apparatus may determine accuracy of path information in the first information associated with the second information. For example, if the proportion of the locations on which the check succeeds in the plurality of locations is high (for example, 90%), and path information in most of the plurality of pieces of first information corresponding to the plurality of locations indicates a high likelihood that a path corresponding to the first information is an LOS path, the first apparatus determines that the path information in the plurality of pieces of first information is accurate. For another example, if the proportion of the locations on which the check succeeds in the plurality of locations is low (for example, 10%), and path information in most of the plurality of pieces of first information corresponding to the plurality of locations indicates a high likelihood that a path corresponding to the first information is an LOS path, the first apparatus determines that the path information in the plurality of pieces of first information is inaccurate. For related content, refer to Implementation C5. Details are not described again.

Implementation C14: The information indicating accuracy of the path information includes information indicating a proportion of locations on which check fails in a plurality of locations obtained based on the at least one piece of first information.

For example, the first apparatus reports a plurality of pieces of first information, the location management apparatus performs positioning based on the plurality of pieces of first information, to obtain a plurality of locations, and the location management apparatus collects statistics on a quantity of locations on which check fails in the plurality of locations, to obtain a proportion of the locations on which the check fails in the plurality of locations.

After receiving the information indicating the proportion of the locations on which the check fails in the plurality of locations, the first apparatus may determine accuracy of path information in the first information associated with the second information. For example, if the proportion of the locations on which the check fails in the plurality of locations is high (for example, 90%), and path information in most of the plurality of pieces of first information corresponding to the plurality of locations indicates a high likelihood that a path corresponding to the first information is an LOS path, the first apparatus determines that the path information in the plurality of pieces of first information is inaccurate. For another example, if the proportion of the locations on which the check fails in the plurality of locations is low (for example, 10%), and path information in most of the plurality of pieces of first information corresponding to the plurality of locations indicates a high likelihood that a path corresponding to the first information is an LOS path, the first apparatus determines that the path information in the plurality of pieces of first information is accurate. Implementation C14 is similar to Implementation C13. Details are not described again.

Implementation C15: The information indicating accuracy of the path information includes information indicating a proportion of locations whose errors are less than a second error threshold in a plurality of locations obtained based on the at least one piece of first information.

For example, the first apparatus reports a plurality of pieces of first information, the location management apparatus performs positioning based on the plurality of pieces of first information, to obtain the plurality of locations, and the location management apparatus collects statistics on path information whose errors are less than the second error threshold in the plurality of locations, to obtain a proportion of the path information whose errors are less than the second error threshold.

After receiving the information indicating the proportion of the locations whose errors are less than the second error threshold, the first apparatus may determine accuracy of path information in the first information associated with the second information. For example, if the proportion of the locations whose errors are less than the second error threshold is high (for example, 90%), and path information in most of the plurality of pieces of first information corresponding to the plurality of locations indicates a high likelihood that a path corresponding to the first information is an LOS path, the first apparatus determines that the path information in the plurality of pieces of first information is accurate. For another example, if the proportion of the locations whose errors are less than the second error threshold is low (for example, 10%), and path information in most of the plurality of pieces of first information corresponding to the plurality of locations indicates a high likelihood that a path corresponding to the first information is an LOS path, the first apparatus determines that the path information in the plurality of pieces of first information is inaccurate. For content about the error of the location in Implementation C15, refer to content in Implementation C12. Details are not described again.

In this embodiment of this application, Implementation C1, Implementation C2, Implementation C3, Implementation C4, Implementation C5, Implementation C6, Implementation C7, Implementation C8, Implementation C9, Implementation C10, Implementation C11, Implementation C12, Implementation C13, Implementation C14, and Implementation C15 may also be used in combination. For example, the information indicating accuracy of the path information includes one or more of the information included in the information indicating accuracy of the path information in Implementation C1, Implementation C2, Implementation C3, Implementation C4, Implementation C5, Implementation C6, Implementation C7, Implementation C8, Implementation C9, Implementation C10, Implementation C11, Implementation C12, Implementation C13, Implementation C14, and Implementation C15. For related content in these implementations, refer to each other. Details are not described again.

In this embodiment of this application, the location management apparatus determines accuracy of the path information in a plurality of implementations. For example, the location management apparatus may determine at least one piece of first location information based on measurement information in the at least one piece of first information, and determine accuracy of the path information based on the at least one piece of first location information.

In an actual application, a location determined based on measurement information obtained based on an LOS path is accurate. Therefore, locations obtained based on measurement information of the LOS path may be close (or referred to as being aggregated, or having a high aggregation degree). A location determined based on measurement information obtained based on an NLOS path is inaccurate. Therefore, locations obtained based on measurement information of the NLOS path may be discrete (or referred to as being non-aggregated, or having a low aggregation degree). In this embodiment of this application, accuracy of the path information may be determined based on this phenomenon.

In a possible implementation, the location management apparatus may obtain a plurality of pieces of first location information by using the at least one piece of first information, and then may determine accuracy of the path information in the first information based on an aggregation degree between the plurality of pieces of first location information. For example, when path information in one piece of first information indicates a high likelihood that a path corresponding to the first information is an LOS path, if first location information corresponding to the first information is aggregated with other first location information, it may be determined that accuracy of the path information in the first information is high. For another example, if first location information corresponding to the first information is far away from and is not aggregated with other first location information, it may be determined that accuracy of the path information in the first information is low. For another example, when path information in one piece of first information indicates a high likelihood that a path corresponding to the first information is an NLOS path, if first location information corresponding to the first information is far away from and is not aggregated with other first location information, it may be determined that accuracy of the path information in the first information is high. For another example, if first location information corresponding to the first information is aggregated with other first location information, it may be determined that accuracy of the path information in the first information is low.

In another possible implementation, the location management apparatus may obtain at least one piece of second location information, and determine accuracy of the path information based on the at least one piece of first location information and the at least one piece of second location information. There is an association relationship between accuracy of path information and a first aggregation degree, and the first aggregation degree includes an aggregation degree between at least one piece of first location information and at least one piece of second location information.

For example, when the path information indicates that a probability that the measurement information is measured based on an LOS path is greater than a third probability threshold, accuracy of the path information is positively correlated with the first aggregation degree. For example, when path information in one piece of first information indicates a high likelihood (greater than a third probability threshold) that a path corresponding to the first information is an LOS path, if an aggregation degree between the at least one piece of first location information and the at least one piece of second location information is high, it may be determined that accuracy of the path information in the first information is high. For another example, if an aggregation degree between the at least one piece of first location information and the at least one piece of second location information is low, it may be determined that accuracy of the path information in the first information is low.

For another example, when the path information indicates that a probability that the measurement information is measured based on an LOS path is not greater than a third probability threshold, accuracy of the path information is negatively correlated with a first aggregation degree. For another example, when path information in one piece of first information indicates a low likelihood (for example, not greater than a third probability threshold) that a path corresponding to the first information is an LOS path, that is, which may also be understood as a high likelihood that the path corresponding to the first information is an NLOS path, if an aggregation degree between the at least one piece of first location information and the at least one piece of second location information is low, it may be determined that accuracy of the path information in the first information is high. For another example, if an aggregation degree between the at least one piece of first location information and the at least one piece of second location information is high, it may be determined that accuracy of the path information in the first information is low.

In this embodiment of this application, the at least one piece of second location information may include one or more of the following content: preset location information; historical location information of an apparatus that needs to be positioned (the apparatus that needs to be positioned may be the first apparatus or the second apparatus); or location information determined based on at least one piece of other measurement information, where a probability that measurement information in the at least one piece of other measurement information is measured based on an LOS path is greater than a second probability threshold. The preset location information may be a preset location of the apparatus that needs to be positioned. The at least one piece of other measurement information in this embodiment of this application may be measurement information that is reported by the first apparatus and that is different from the measurement information in the at least one piece of first information. Information that carries the at least one piece of other measurement information may or may not include path information.

It can be learned from the foregoing examples that the location management apparatus may receive more measurement information, and then evaluate accuracy of the path information based on the more measurement information. Therefore, an evaluation result is accurate.

In this embodiment of this application, the location management apparatus may receive measurement information and path information from a plurality of first apparatuses. For example, the first apparatus is a network apparatus, and the second apparatus is a first terminal apparatus. The location management apparatus may receive measurement information reported by a plurality of network apparatuses, and the location management apparatus may know location information of these network apparatuses. Therefore, the location management apparatus may check, based on the plurality of pieces of measurement information and the location information of these network apparatuses, path information that is in the at least one piece of first information and that is reported by the first apparatus, so that accuracy of the path information can be accurately obtained.

For example, the location management apparatus may perform positioning on a plurality of pieces of measurement information (which may be measurement information from a plurality of first apparatuses) corresponding to a plurality of pieces of path information indicating a high likelihood of an LOS path, and check whether location information determined based on the measurement information is the same or fluctuates within a specific range (or referred to as clustering, or referred to as having a high aggregation degree). If the location information is the same or fluctuates within a specific range, it indicates that path information in the measurement information is accurate. If locations corresponding to one or more pieces of measurement information are far away from a location corresponding to other measurement information, it may be determined that path information corresponding to the one or more pieces of measurement information may be inaccurate. For another example, the location management apparatus may perform positioning on a plurality of pieces of measurement information (which may be measurement information from a plurality of first apparatuses) corresponding to a plurality of pieces of path information indicating a high likelihood of an NLOS path, and check whether location information determined based on the measurement information is scattered. If the location information is scattered, it indicates that path information in the measurement information is accurate. Alternatively, if locations corresponding to one or more pieces of measurement information are close, it may be determined that path information corresponding to the one or more pieces of measurement information may be inaccurate.

For another example, when the first apparatus is a first terminal apparatus, the second apparatus may be a network apparatus. In a possible implementation, the first terminal apparatus may receive reference signals from a plurality of network apparatuses, and then measure the plurality of reference signals, to obtain measurement information corresponding to the plurality of network apparatuses. The first terminal apparatus may report, to the location management apparatus, a plurality of pieces of measurement information obtained by measuring reference signals from a plurality of network apparatuses. An apparatus configured to check path information that is in the at least one piece of first information and that is reported by the first apparatus needs to learn of location information of the plurality of network apparatuses. In a possible implementation, because the location management apparatus may learn of location information of the plurality of network apparatuses in advance, the location management apparatus may check path information that is in the at least one piece of first information and that is reported by the first apparatus. For example, the location management apparatus may check, based on the plurality of pieces of measurement information and the location information of the network apparatus, the path information that is in the at least one piece of first information and that is reported by the first apparatus, so that accuracy of the path information can be accurately obtained.

In this embodiment of this application, the second information is used by the first apparatus to perform one or more of the following content: increasing a first-path energy detection threshold, increasing a consistency decision threshold, switching an LOS path identification algorithm, or switching an NLOS path identification algorithm. The first apparatus may also perform one or more of the content based on the second information.

For example, the second information indicates low accuracy of the path information, and the path information indicates a high likelihood that a path corresponding to the first information is an LOS path. In this case, the first apparatus may increase the first-path energy detection threshold. In this way, when determining that energy of a path of a received reference signal is greater than an increased first-path energy detection threshold, the first apparatus determines a high likelihood that the path is an LOS path, thereby improving accuracy of determining the LOS path by the first apparatus.

For another example, the second information indicates low accuracy of the path information, and the path information indicates a high likelihood that a path corresponding to the first information is an LOS path. In this case, the first apparatus may increase a consistency decision threshold. For example, the first apparatus includes a plurality of antennas, and the first apparatus receives a reference signal through the plurality of antennas. For a path of the reference signal, if energy of signals corresponding to the path that are received through the plurality of antennas tends to be consistent and is greater than the increased consistency decision threshold, a high likelihood that the path is an LOS path may be determined, thereby improving accuracy of determining the LOS path by the first apparatus.

For another example, the first apparatus may switch an LOS path identification algorithm, or switch an NLOS path identification algorithm, and subsequently determine path information according to a switched algorithm. For example, the second information indicates low accuracy of the path information, and the path information indicates a high likelihood that a path corresponding to the first information is an LOS path. In this case, the first apparatus may switch the LOS path identification algorithm, to improve accuracy of determining the LOS path by the first apparatus. For another example, the second information indicates low accuracy of the path information, and the path information indicates a high likelihood that a path corresponding to the first information is an NLOS path. In this case, the first apparatus may switch the NLOS path identification algorithm, to improve accuracy of determining the NLOS path by the first apparatus.

The solution provided in this embodiment of this application may be applied to a solution for identifying an LOS/NLOS path based on artificial intelligence (artificial intelligence, AI). In this solution, because the location management apparatus may feed back accuracy of the path information to the first apparatus, the first apparatus may adaptively adjust the LOS/NLOS identification solution of the first apparatus, thereby improving performance.

Names of the foregoing messages are merely examples. With evolution of communication technologies, the name of any message may be changed. However, regardless of how the names of the messages are changed, provided that meanings of the messages are the same as those of the messages in this application, the messages fall within the protection scope of this application.

In embodiments of this application, sending information to the terminal device may be understood as that a destination of the information is the terminal device. For example, that a module A sends information to a terminal includes: The module A sends the information to the terminal through an air interface. Optionally, the module A may perform a baseband and/or intermediate radio frequency operation on the information; or the module A delivers the information to a module B, and the module B sends the information to the terminal. When sending the information to the terminal, the module B may transparently transmit the information; segment the information and then send the information; or multiplex the information and other information and then send the information. Optionally, the module B may perform a baseband and/or intermediate radio frequency operation on the information and then send the information. Optionally, the module B may encapsulate the information in a data packet. Optionally, the module B may further add a packet header, a padding bit, and/or the like to the data packet.

In embodiments of this application, receiving information from a terminal device may be understood as that a source of the information is the terminal device. For example, that a module A receives information from a terminal device includes: The module A receives the information from the terminal through an air interface. Optionally, the module A may perform a baseband and/or intermediate radio frequency operation on the information; or a module B receives the information from the terminal through an air interface, and delivers the information to the module A. That the module B delivers the information to the module A includes: transparently delivering the received information to the module A; combining a plurality of received segments into the information and then delivering the information to the module A; or extracting the information from multiplexed information and then delivering the information to the module A. Optionally, the module B may perform a baseband and/or intermediate radio frequency operation on the received information and then send the information. Optionally, the information received by the module B is encapsulated in a data packet. Optionally, the data packet includes a packet header, a padding bit, and/or the like.

The module B may be one module, or may be a plurality of modules coupled in sequence. This is not limited. For example, the module A is a DU module, and the module B is an RU module. For another example, the module A is a CU-CP module, and the module B is a DU module and an RU module.

The foregoing mainly describes, from a perspective of interaction between the network elements, the solutions provided in this application. It may be understood that, to implement the foregoing functions, the foregoing network elements include corresponding hardware structures and/or software modules for performing the functions. A person skilled in the art should be easily aware that, in combination with units and algorithm steps of the examples described in embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

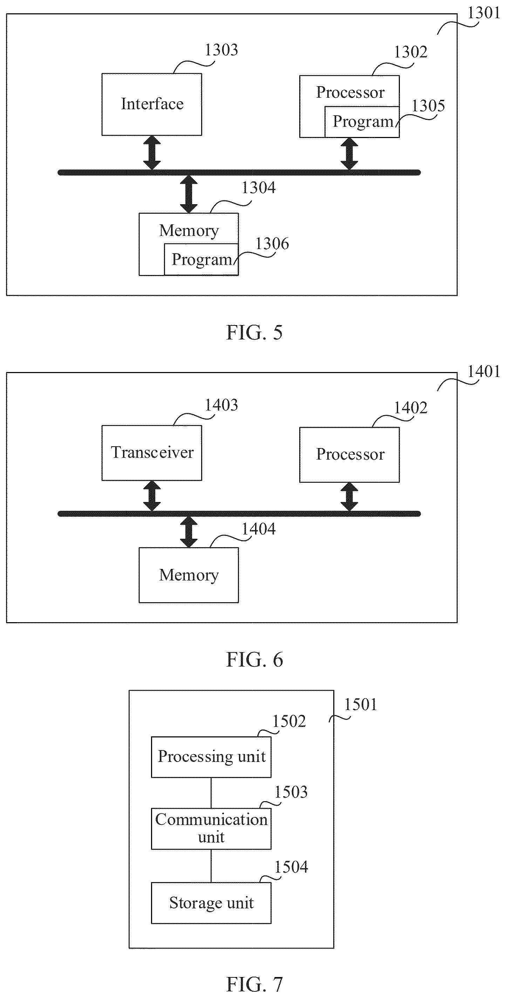

According to the foregoing method, FIG. 5 is a diagram of a structure of an apparatus according to an embodiment of this application.

FIG. 5 is a simplified diagram of an apparatus 1301. The apparatus 1301 is configured to implement a function of a network element in embodiments of this application. For example, the network element may be a base station, a terminal, a DU, a CU, a CU-CP, a CU-UP, or an RU. The apparatus 1301 may be the network element, an apparatus that can be installed in the network element, or an apparatus that can be used together with the network element. This is not limited. For example, the apparatus may be a chip or a chip system. The apparatus 1301 includes an interface 1303 and a processor 1302. Optionally, the processor 1302 is configured to execute a program 1305. The processor 1302 may store the program 1305, or obtain the program 1305 from another component or another device (for example, from a memory 1304 or from a third-party website through downloading). Optionally, the apparatus 1301 includes the memory 1304. The memory 1304 is configured to store a program 1306. The program 1306 may be pre-stored, or may be subsequently loaded. Optionally, the memory 1304 may be further configured to store necessary data. These components operate together to provide various functions described in embodiments of this application.

The processor 1302 may include one or more processors to serve as a combination of computing devices. The processor 1302 may separately include one or more of the following: a microprocessor, a microcontroller, a digital signal processor (Digital Signal Processor, DSP), a digital signal processor device (Digital Signal Processor device, DSPD), an application-specific integrated circuit (Application-Specific Integrated Circuit, ASIC), a field programmable gate array (Field Programmable Gate Array, FPGA), a programmable logic device (programmable logic device, PLD), gating logic, transistor logic, a discrete hardware circuit, a processing circuit, or other appropriate hardware or firmware, and/or a combination of hardware and software configured to perform various functions described in embodiments of this application. The processor 1302 may be a general-purpose processor or a dedicated processor. For example, the processor 1302 may be a baseband processor or a central processing unit. The baseband processor may be configured to process a communication protocol and communication data. The central processing unit may be configured to: execute a software program, and process data in the software program.

The interface 1303 may include any appropriate hardware or software configured to enable communication with one or more computer devices (for example, the network element in embodiments of this application). For example, in some embodiments, the interface 1303 may include a terminal and/or a pin configured to be coupled with a wire of a wired connection or a wireless interface of a wireless connection. In some embodiments, the interface 1303 may include a transmitter, a receiver, an interface, and/or an antenna. The interface may be configured to enable communication between computer devices (for example, the network elements in embodiments of this application) by using any available protocol (for example, a 3GPP standard protocol).

The program in embodiments of this application is software in a broad sense. The software may be program code, a program, a subprogram, an instruction set, code, a code segment, a software module, an application program, a software application program, or the like. The program may be run in a processor and/or a computer, to perform various functions and/or processes described in embodiments of this application.

The memory 1304 may store necessary data needed when the processor 1302 executes software. The memory 1304 may be implemented by using any suitable storage technology. For example, the memory 1304 may be any available storage medium that can be accessed by a processor and/or a computer. A non-limiting example of the storage medium is a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a removable medium, an optical disk memory, a magnetic disk storage medium, a magnetic storage device, a flash memory, a register, a state memory, a remotely installed memory, a local or remote storage component, or any other medium that can carry or store software, data, or information and can be accessed by a processor/computer.

The memory 1304 and the processor 1302 may be disposed separately, or may be integrated together. The processor 1302 may read information from the memory 1304, and store and/or write information in the memory. The memory 1304 may be integrated into the processor 1302. The processor 1302 and the memory 1304 may be disposed in an integrated circuit (for example, an application-specific integrated circuit (application-specific integrated circuit, ASIC)). The integrated circuit may be disposed in the network element or another network node in embodiments of this application. In the figure, the memory 1304 is a dashed line, which further identifies that the memory is optional.

Further, the communication apparatus 1301 may further include a bus system. The processor 1302, the memory 1304, and the interface 1303 may be connected through the bus system.

As shown in FIG. 5, the apparatus 1301 may be a first apparatus or a location management apparatus, or may be a chip or a circuit, for example, a chip or a circuit that may be disposed in the first apparatus or the location management apparatus.

When the apparatus 1301 is configured to implement a function of the first apparatus, the processor 1302 is configured to: send at least one piece of first information and receive second information through the interface 1303.

When the apparatus 1301 is configured to implement a function of the location management apparatus, the processor 1302 is configured to: receive at least one piece of first information and send second information through the interface 1303.

For concepts, explanations, detailed descriptions, and other steps of the communication apparatus that are related to the technical solutions provided in embodiments of this application, refer to descriptions about the content in the foregoing methods or other embodiments. Details are not described herein.

According to the foregoing method, FIG. 6 is a diagram of a structure of a communication apparatus according to an embodiment of this application. As shown in FIG. 6, the apparatus 1401 may include a transceiver 1403 and a processor 1402. Further, the apparatus 1401 may include a memory 1404. In the figure, the memory 1404 is a dashed line, which further identifies that the memory is optional. The transceiver 1403 is configured to: input and/or output information. The processor 1402 is configured to execute a computer program or instructions, so that the apparatus 1401 implements the first apparatus or the location management apparatus in the related solution in FIG. 4. In this embodiment of this application, the transceiver 1403 may implement the solution implemented by the interface 1303 in FIG. 5, the processor 1402 may implement the solution implemented by the processor 1302 in FIG. 5, and the memory 1404 may implement the solution implemented by the memory 1304 in FIG. 5. Details are not described herein again.

Based on the foregoing embodiments and a same concept, FIG. 7 is a diagram of a communication apparatus according to an embodiment of this application. As shown in FIG. 7, the apparatus 1501 may be a first apparatus or a location management apparatus, or may be a chip or a circuit, for example, a chip or a circuit that may be disposed in the first apparatus or the location management apparatus.

The apparatus 1501 includes a processing unit 1502 and a communication unit 1503. Further, the apparatus 1501 may include a storage unit 1504, or may not include a storage unit 1504. In the figure, the storage unit 1504 is a dashed line, which further identifies that the memory is optional.

When the apparatus 1501 is configured to implement a function of the first apparatus, the processing unit 1502 is configured to: send at least one piece of first information and receive second information through the communication unit 1503.

When the apparatus 1501 is configured to implement a function of the location management apparatus, the processing unit 1502 is configured to: receive at least one piece of first information and send second information through the communication unit 1503.

For concepts, explanations, detailed descriptions, and other steps of the communication apparatus that are related to the technical solutions provided in embodiments of this application, refer to descriptions about the content in the foregoing methods or other embodiments. Details are not described herein.

It may be understood that for a function of each unit in the apparatus 1501, refer to implementations of corresponding method embodiments. Details are not described herein again.

It should be understood that division into units of the communication apparatus is merely logical function division. During actual implementation, all or some of the units may be integrated into a physical entity, or may be physically separated. In this embodiment of this application, the communication unit 1503 may be implemented by the interface 1303 in FIG. 5, and the processing unit 1502 may be implemented by the processor 1302 in FIG. 5.

According to the method provided in embodiments of this application, this application further provides a computer program product. The computer program product includes computer program code or instructions. When the computer program code or the instructions are run on a computer, the computer is enabled to perform the method according to any one of embodiments shown in FIG. 4.

According to the methods provided in embodiments of this application, this application further provides a computer-readable storage medium. The computer-readable medium stores program code. When the program code is run on a computer, the computer is enabled to perform the method according to any one of embodiments shown in FIG. 4.

According to the methods provided in embodiments of this application, this application further provides a chip system. The chip system may include a processor. The processor is coupled to a memory, and may be configured to perform the method according to any one of embodiments shown in FIG. 4. Optionally, the chip system further includes the memory. The memory is configured to store a computer program (which may also be referred to as code or instructions). The processor is configured to: invoke a computer program from the memory and run the computer program, so that a device on which the chip system is installed performs the method according to any one of embodiments shown in FIG. 4.

According to the method provided in embodiments of this application, this application further provides a system, including the one or more first apparatuses.

In a possible implementation, the system may further include one or more second apparatuses. In another possible implementation, the system may further include a location management apparatus.

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be noted that a part of this patent application document includes content protected by copyright. Except for making copies of patent documents of the Patent Office or recorded content of patent documents, the copyright owner reserves the copyright.

The network device and the terminal device in the foregoing apparatus embodiments correspond to the network device or the terminal device in the method embodiments. A corresponding module or unit performs a corresponding step. For example, a communication unit (a transceiver) performs a receiving step or a sending step in the method embodiments, and a step other than the sending step and the receiving step may be performed by a processing unit (a processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical block) described in embodiments disclosed in this specification and steps (step) can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. When functions are implemented in a form of a software functional unit and sold or used as an independent product, the functions may be stored in a computer-readable storage medium.

The foregoing descriptions are merely specific implementations of this application, but the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A positioning information transmission method, wherein the method is applied to a first apparatus, and the method comprises:
sending at least one piece of first information, wherein the at least one piece of first information is used for positioning, first information in the at least one piece of first information comprises measurement information and path information, the measurement information indicates a measurement result obtained based on a reference signal, and the path information indicates a likelihood that a path corresponding to the measurement information is a line of sight LOS path, and/or a likelihood that a path corresponding to the measurement information is a non-line of sight NLOS path; and
receiving second information, wherein the second information indicates accuracy of path information in one or more pieces of first information in the at least one piece of first information.

2. The method according to claim 1, wherein the second information further comprises indication information, and the indication information indicates that the second information has an association relationship with the one or more pieces of first information.

3. The method according to claim 2, wherein the indication information comprises at least one of the following content:
identification information of a sending apparatus of a reference signal on which the one or more pieces of first information are based;
identification information of a reference signal on which the one or more pieces of first information are based;
time information corresponding to the one or more pieces of first information;
time range information corresponding to the one or more pieces of first information; or
measurement parameter information corresponding to the one or more pieces of first information.

4. The method according to any one of claims 1 to 3, wherein when the second information indicates accuracy of path information in a plurality of pieces of first information, the plurality of pieces of first information meet one or more of the following content:
sending apparatuses of reference signals on which the plurality of pieces of first information are based are the same, or sending apparatuses of reference signals on which two pieces of first information in the plurality of pieces of first information are based are different;
time corresponding to the plurality of pieces of first information are the same, or time corresponding to two pieces of first information in the plurality of pieces of first information are different;
time ranges corresponding to the plurality of pieces of first information are the same, or time ranges corresponding to two pieces of first information in the plurality of pieces of first information are different; or
measurement parameters corresponding to the plurality of pieces of first information are the same, or measurement parameters corresponding to two pieces of first information in the plurality of pieces of first information are different.

5. The method according to any one of claims 1 to 4, wherein the first information in the at least one piece of first information comprises one or more of the following content:
identification information of a sending apparatus of a reference signal on which the first information is based;
identification information of a reference signal on which the first information is based;
time information corresponding to the first information;
time range information corresponding to the first information; or
measurement parameter information corresponding to the first information.

6. The method according to any one of claims 1 to 5, wherein the second information comprises one or more of the following content:
information indicating correct path information, or information indicating incorrect path information;
information indicating a correctness probability of path information;
information indicating an incorrectness probability of path information;
information indicating an error of path information;
information indicating a proportion of correct path information in a plurality of pieces of path information in the at least one piece of first information;
information indicating a proportion of incorrect path information in a plurality of pieces of path information in the at least one piece of first information;
information indicating a proportion of path information whose correctness probabilities are greater than a first probability threshold in a plurality of pieces of path information in the at least one piece of first information; or
information indicating a proportion of path information whose errors are less than a first error threshold in a plurality of pieces of path information in the at least one piece of first information.

7. A positioning information transmission method, wherein the method is applied to a location management apparatus, and the method comprises:
receiving at least one piece of first information, wherein the at least one piece of first information is used for positioning, first information in the at least one piece of first information comprises measurement information and path information, the measurement information indicates a measurement result obtained based on a reference signal, and the path information indicates a likelihood that a path corresponding to the measurement information is a line of sight LOS path, and/or a likelihood that a path corresponding to the measurement information is a non-line of sight NLOS path; and
sending second information, wherein the second information indicates accuracy of path information in one or more pieces of first information in the at least one piece of first information.

8. The method according to claim 7, wherein the second information further comprises indication information, and the indication information indicates that the second information has an association relationship with the one or more pieces of first information in the at least one piece of first information.

9. The method according to claim 8, wherein the indication information comprises at least one of the following content:
identification information of a sending apparatus of a reference signal on which the one or more pieces of first information are based;
identification information of a reference signal on which the one or more pieces of first information are based;
time information corresponding to the one or more pieces of first information;
time range information corresponding to the one or more pieces of first information; or
measurement parameter information corresponding to the one or more pieces of first information.

10. The method according to any one of claims 7 to 9, wherein when the second information indicates accuracy of path information in a plurality of pieces of first information, the plurality of pieces of first information meet one or more of the following content:
sending apparatuses of reference signals on which the plurality of pieces of first information are based are the same, or sending apparatuses of reference signals on which two pieces of first information in the plurality of pieces of first information are based are different;
time corresponding to the plurality of pieces of first information are the same, or time corresponding to two pieces of first information in the plurality of pieces of first information are different;
time ranges corresponding to the plurality of pieces of first information are the same, or time ranges corresponding to two pieces of first information in the plurality of pieces of first information are different; or
measurement parameters corresponding to the plurality of pieces of first information are the same, or measurement parameters corresponding to two pieces of first information in the plurality of pieces of first information are different.

11. The method according to any one of claims 8 to 10, wherein the first information in the at least one piece of first information comprises one or more of the following content:
identification information of a sending apparatus of a reference signal on which the first information is based;
identification information of a reference signal on which the first information is based;
time information corresponding to the first information;
time range information corresponding to the first information; or
measurement parameter information corresponding to the first information.

12. The method according to any one of claims 7 to 11, wherein the second information comprises one or more of the following content:
information indicating correct path information, or information indicating incorrect path information;
information indicating a correctness probability of path information;
information indicating an incorrectness probability of path information;
information indicating an error of path information;
information indicating a proportion of correct path information in a plurality of pieces of path information in the at least one piece of first information;
information indicating a proportion of incorrect path information in a plurality of pieces of path information in the at least one piece of first information;
information indicating a proportion of path information whose correctness probabilities are greater than a first probability threshold in a plurality of pieces of path information in the at least one piece of first information; or
information indicating a proportion of path information whose errors are less than a first error threshold in a plurality of pieces of path information in the at least one piece of first information.

13. A positioning information transmission apparatus, wherein the apparatus is used in a first apparatus, the apparatus comprises a processor and a communication interface, and the processor is configured to perform the following content through the communication interface:
sending at least one piece of first information, wherein the at least one piece of first information is used for positioning, first information in the at least one piece of first information comprises measurement information and path information, the measurement information indicates a measurement result obtained based on a reference signal, and the path information indicates a likelihood that a path corresponding to the measurement information is a line of sight LOS path, and/or a likelihood that a path corresponding to the measurement information is a non-line of sight NLOS path; and
receiving second information, wherein the second information indicates accuracy of path information in one or more pieces of first information in the at least one piece of first information.

14. The apparatus according to claim 13, wherein the second information further comprises indication information, and the indication information indicates that the second information has an association relationship with the one or more pieces of first information in the at least one piece of first information.

15. The apparatus according to claim 14, wherein the indication information comprises at least one of the following content:
identification information of a sending apparatus of a reference signal on which the one or more pieces of first information are based;
identification information of a reference signal on which the one or more pieces of first information are based;
time information corresponding to the one or more pieces of first information;
time range information corresponding to the one or more pieces of first information; or
measurement parameter information corresponding to the one or more pieces of first information.

16. The apparatus according to any one of claims 13 to 15, wherein when the second information indicates accuracy of path information in a plurality of pieces of first information, the plurality of pieces of first information meet one or more of the following content:
sending apparatuses of reference signals on which the plurality of pieces of first information are based are the same, or sending apparatuses of reference signals on which two pieces of first information in the plurality of pieces of first information are based are different;
time corresponding to the plurality of pieces of first information are the same, or time corresponding to two pieces of first information in the plurality of pieces of first information are different;
time ranges corresponding to the plurality of pieces of first information are the same, or time ranges corresponding to two pieces of first information in the plurality of pieces of first information are different; or
measurement parameters corresponding to the plurality of pieces of first information are the same, or measurement parameters corresponding to two pieces of first information in the plurality of pieces of first information are different.

17. The apparatus according to any one of claims 14 to 16, wherein the first information in the at least one piece of first information comprises one or more of the following content:
identification information of a sending apparatus of a reference signal on which the first information is based;
identification information of a reference signal on which the first information is based;
time information corresponding to the first information;
time range information corresponding to the first information; or
measurement parameter information corresponding to the first information.

18. The apparatus according to any one of claims 13 to 17, wherein the second information comprises one or more of the following content:
information indicating correct path information, or information indicating incorrect path information;
information indicating a correctness probability of path information;
information indicating an incorrectness probability of path information;
information indicating an error of path information;
information indicating a proportion of correct path information in a plurality of pieces of path information in the at least one piece of first information;
information indicating a proportion of incorrect path information in a plurality of pieces of path information in the at least one piece of first information;
information indicating a proportion of path information whose correctness probabilities are greater than a first probability threshold in a plurality of pieces of path information in the at least one piece of first information; or
information indicating a proportion of path information whose errors are less than a first error threshold in a plurality of pieces of path information in the at least one piece of first information.

19. A positioning information transmission apparatus, wherein the apparatus is used in a location management apparatus, the apparatus comprises a processor and a communication interface, and the processor is configured to perform the following content through the communication interface:
receiving at least one piece of first information, wherein the at least one piece of first information is used for positioning, first information in the at least one piece of first information comprises measurement information and path information, the measurement information indicates a measurement result obtained based on a reference signal, and the path information indicates a likelihood that a path corresponding to the measurement information is a line of sight LOS path, and/or a likelihood that a path corresponding to the measurement information is a non-line of sight NLOS path; and
sending second information, wherein the second information indicates accuracy of path information in one or more pieces of first information in the at least one piece of first information.

20. The apparatus according to claim 19, wherein the second information further comprises indication information, and the indication information indicates that the second information has an association relationship with the one or more pieces of first information in the at least one piece of first information.

21. The apparatus according to claim 20, wherein the indication information comprises at least one of the following content:
identification information of a sending apparatus of a reference signal on which the one or more pieces of first information are based;
identification information of a reference signal on which the one or more pieces of first information are based;
time information corresponding to the one or more pieces of first information;
time range information corresponding to the one or more pieces of first information; or
measurement parameter information corresponding to the one or more pieces of first information.

22. The apparatus according to any one of claims 19 to 21, wherein when the second information indicates accuracy of path information in a plurality of pieces of first information, the plurality of pieces of first information meet one or more of the following content:
sending apparatuses of reference signals on which the plurality of pieces of first information are based are the same, or sending apparatuses of reference signals on which two pieces of first information in the plurality of pieces of first information are based are different;
time corresponding to the plurality of pieces of first information are the same, or time corresponding to two pieces of first information in the plurality of pieces of first information are different;
time ranges corresponding to the plurality of pieces of first information are the same, or time ranges corresponding to two pieces of first information in the plurality of pieces of first information are different; or
measurement parameters corresponding to the plurality of pieces of first information are the same, or measurement parameters corresponding to two pieces of first information in the plurality of pieces of first information are different.

23. The apparatus according to any one of claims 20 to 22, wherein the first information in the at least one piece of first information comprises one or more of the following content:
identification information of a sending apparatus of a reference signal on which the first information is based;
identification information of a reference signal on which the first information is based;
time information corresponding to the first information;
time range information corresponding to the first information; or
measurement parameter information corresponding to the first information.

24. The apparatus according to any one of claims 19 to 23, wherein the second information comprises one or more of the following content:
information indicating correct path information, or information indicating incorrect path information;
information indicating a correctness probability of path information;
information indicating an incorrectness probability of path information;
information indicating an error of path information;
information indicating a proportion of correct path information in a plurality of pieces of path information in the at least one piece of first information;
information indicating a proportion of incorrect path information in a plurality of pieces of path information in the at least one piece of first information;
information indicating a proportion of path information whose correctness probabilities are greater than a first probability threshold in a plurality of pieces of path information in the at least one piece of first information; or
information indicating a proportion of path information whose errors are less than a first error threshold in a plurality of pieces of path information in the at least one piece of first information.

25. A communication apparatus, comprising a processor and a memory, wherein
the memory is configured to store a computer program or instructions; and
the processor is configured to execute the computer program or the instructions in the memory, so that the method according to any one of claims 1 to 6 or the method according to any one of claims 7 to 12 is performed.

26. A communication apparatus, comprising a processing module and a communication module, wherein the processing module is configured to perform the method according to any one of claims 1 to 6 or the method according to any one of claims 7 to 12 through the communication module.

27. A computer-readable storage medium, wherein the computer-readable storage medium stores computer-executable instructions, and when the computer-executable instructions are invoked by a computer, the method according to any one of claims 1 to 6 is performed, or the method according to any one of claims 7 to 12 is performed.

28. A chip system, comprising a communication interface and a processor, wherein
the communication interface is configured to: input and/or output signaling or data; and
the processor is configured to execute a computer-executable program, so that a device on which the chip system is installed performs the method according to any one of claims 1 to 6 or the method according to any one of claims 7 to 12.

29. A computer program product, wherein the computer program product stores computer-executable instructions, and when the computer-executable instructions are invoked by a computer, the method according to any one of claims 1 to 6 or the method according to any one of claims 7 to 12 is performed.
